# EUROPÄISCHE PATENTSCHRIFT

(11) **EP 3 537 870 B1**
(45) Veröffentlichungstag und Bekanntmachung des Hinweises auf die Patenterteilung: **02.12.2020**
(21) Anmeldenummer: 17791395.1
(22) Anmeldetag: 30.10.2017
(51) Int. Cl.: A01G 9/24, A01G 9/14, A01G 9/26

(54) **GEWÄCHSHAUS**
GREENHOUSE
SERRE

(30) Priorität: 10.11.2016 CH 14922016
(43) Veröffentlichungstag der Anmeldung: 18.09.2019
(73) Patentinhaber: Glesser-Lott, Erika, 8235 Lohn (CH)
(72) Erfinder: GLESSER-LOTT, Markus, 8235 Lohn (CH)
(74) Vertreter: Kaminski Harmann Patentanwälte AG (Schweiz)
(86) Internationale Anmeldenummer: PCT/EP2017/077715
(87) Internationale Veröffentlichungsnummer: WO 2018/086922

(56) Entgegenhaltungen:
- EP-A2- 2 418 422
- EP-A2- 2 489 256
- WO-A1-2012/169357
- WO-A1-2016/072042
- JP-A- H05 176 634
- US-A- 4 198 953
- US-A1- 2001 013 207

## Beschreibung

Die Erfindung bezieht sich auf Gewächshäuser nach dem Oberbegriff des Anspruchs 1. Gewächshäuser werden für die Produktion von Pflanzen verwendet und sie umfassen Wand- und Deckenbereiche, die einen Innenraum zumindest teilweise umschliessen. Im Innenraum können Pflanzen wachsen, wobei das für das Pflanzenwachstum nötige Licht in der Form von Sonnenlicht durch die Wand- und/oder Deckenbereiche zutritt und/oder in der Form von Kunstlicht bereitgestellt wird. Das den Pflanzen zugeführte Wasser, die den Pflanzen zur Verfügung stehenden Nährstoffe und die Luftfeuchtigkeit sowie die Temperatur im Innenraum können kontrolliert werden. Negative Wirkungen, die von der Witterung und von Schädlingen oder Krankheiten ausgehen, können im Gewächshaus minimiert werden.

WO2013/165248 A1 beschreibt das Kultivieren von Pflanzen in einer Kammer mit Ständern, an denen Leuchtmittel den übereinander angeordneten Tragbereichen von fahrbaren Gestellen zugeordnet sind. Die ausschliessliche Verwendung von Kunstlicht ist mit einem unerwünscht hohen Energieverbrauch verbunden.

EP 0 356 512 B1 beschreibt eine Lösung bei der Sonnenlicht von einem Lichtkonzentrator in flexible Lichtleiter eingespeist wird. Die vom Lichtkonzentrator abgewandten freien Enden der Lichtleiter werden von einer Bewegungsvorrichtung über Regale mit Pilzkulturen bewegt. Diese Lösung führt den Kulturen nur in zeitlichen Abständen Lichtphasen zu, was bei den meisten Pflanzen nicht genügt.

US 4 969 288 beschreibt Container, denen ausgehend von einem der Sonne nachführbaren Sonnenlicht-Kollektor mit Linsen über Lichtleiter-Kabel Licht zugeführt wird. Das Licht tritt durch eine lichtdurchlässige Substanz aus dem Lichtleiter aus und gelangt zu den direkt umliegenden Pflanzenbereichen. Das Sammeln, Leiten und Verteilung des Lichtes ist mit einem grossen Aufwand und mit Verlusten verbunden.

CN 203723156 U beschreibt ein Gewächshaus mit einem auf dem Dach angeordneten Lichtkollektor und mindestens einem im Innern des Gewächshauses nach unten führenden Lichtleiter. Beidseits des Lichtleiters sind übereinander angeordnete, schiefgestellte Tragflächen mit Pflanzen angeordnet, denen gemäss dem schematisch dargestellten diffusen Lichtaustritt Licht aus dem Lichtleiter zugeführt wird. Die Lichtführungseigenschaft des Lichtleiters basiert auf der Totalreflektion von Licht, das sich im Innern des Lichtleiters im Wesentlichen entlang des Lichtleiters ausbreitet und unter kleinen Winkeln von innen auf Stellen der seitlichen Randfläche des Lichtleiters trifft und dabei im Wesentlichen vollständig reflektiert wird. Das im Lichtleiter geführte Licht wird vom Ende des Lichtleiters reflektiert und kann beim Kollektor wieder aus dem Lichtleiter austreten.

Wenn der Lichtleiter prismatische Strukturelemente umfasst, so wird ein Teil des im Lichtleiter geführten Lichtes diffus gestreut und kann dabei aus dem Lichtleiter austreten. Die Intensität des aus dem Lichtleiter austretenden Lichtes nimmt aber entlang des Lichtleiters stark ab, so dass nur im oberen Bereich des Lichtleiters also nahe beim Lichtkollektor viel Licht austritt. Es wird keine gleichmässige Lichtabgabe entlang des gesamten Lichtleiters erzielt. Zudem sind mit der diffusen Streuung auch eine Absorption und somit ein Verlust an Lichtintensität verbunden. Beim dargestellten Lichtleiter kann davon ausgegangen werden, dass maximal 50% des vom Lichtkollektor eingetragenen Lichts in der gewünschten Weise seitlich aus dem Lichtleiter austritt. Diese kleine Ausbeute genügt nicht, um den übereinander angeordneten Pflanzen genügend Sonnenlicht zuzuführen.

US 4 198 953 beschreibt ein Gewächshaus mit einem auf dem Dach angeordneten fokussierenden Kollektor, einem im Innern des Gewächshauses angeordneten reflektierenden Diffusor und reflektierenden inneren Wand- und Dachflächen. Bei den Pflanzen haben die Lichtstrahlen eine überwiegend vertikalen Richtung, so dass übereinander angeordnete Pflanzen nicht genügend mit Licht versorgt sind. Auch bei der Lösung gemäss US2001/0013207 gelangen Lichtstrahlen mit überwiegend vertikaler Ausrichtung in den Innenraum. EP 2 489 256 A2 zeigt einen Reflektor in der Form eines Ausschnitts einer Kugeloberfläche, wobei seitliche Teilflächen um vertikale Achsen schwenkbar sind. Die Kugelform kann von steil oben kommendes Licht nicht zu den Pflanzen leiten.

Die erfindungsgemässe Aufgabe besteht nun darin, ein einfach aufgebautes und effizientes Gewächshaus zu finden.

Die Aufgabe wird durch die Merkmale des Patentanspruchs 1 gelöst. Die abhängigen Patentansprüche beschreiben alternative bzw. vorteilhafte Ausführungsvarianten, welche weitere Aufgaben lösen.

In einem erfinderischen Schritt wurde erkannt, dass das Sonnenlicht nicht über einen Längsbereich eines auf Totalreflektion basierenden Lichtleiters im Gewächshaus direkt aus diesem verteilt werden soll. Gemäss der vorliegenden Erfindung wird für die Verteilung des Lichtes auf übereinander angeordnete Regallagen in das Gewächshaus geführtes Licht von lichtreflektierenden Teilbereichen einer Lichtumlenkvorrichtung umgelenkt, wobei die Flächennormalen dieser Teilbereiche in vorgegebenen Ausrichtungen zu einer vertikalen Längsebene des Gewächshauses ausgerichtet sind.

Ein erfinderisches Gewächshaus umfasst Wand- und Deckenbereiche, welche einen sich entlang einer Längsachse erstreckenden Innenraum zumindest teilweise umschliessen. Beim Deckenbereich ist ein sich in Richtung der Längsachse erstreckender Aufnahmebereich zum Aufnehmen von Sonnenlicht ausgebildet. Im Innenraum steht mindestens auf einer Seite der Längsachse Platz für Pflanzen bereit. An den Aufnahmebereich schliesst gegen den Innenraum hin ein Führungsbereich zum Einführen des Sonnenlichts in den Innenraum an. Im Innenraum erstreckt sich eine reflektierende Lichtumlenkvorrichtung im Wesentlichen in Richtung der Längsachse, wobei die Lichtumlenkvorrichtung lichtreflektierende Teilbereiche umfasst, die Flächennormalen dieser Teilbereiche sind so in vorgegebenen Richtungen ausgerichtet, dass durch den Führungsbereich eintretendes Licht von Teilbereichen zumindest teilweise so reflektiert wird, dass es quer zur Längsachse von der Lichtumlenkvorrichtung weg gegen den mindestens einen im Innenraum vorgesehenen Platz für Pflanzen gerichtet ist.

Im einfach aufgebauten und effizienten Gewächshaus können übereinander angeordnete Pflanzen mit genügend Sonnenlicht versorgt werden.

Die Sonnenstrahlung besteht aus diffuser und direkter Strahlung. Bei der diffusen Strahlung wird das Sonnenlicht aufgrund von Nebel, Dunst oder Wolken gestreut und trifft aus verschiedenen Richtungen auf die Erdoberfläche auf. Bei der direkten Strahlung erreichen die Sonnenstrahlen die Erdoberfläche ohne Streuung und sie sind parallel ausgerichtet. Direkte und diffuse Sonnenstrahlung zusammen ergeben die Globalstrahlung, von der ein spektraler Anteil für die Photosynthese von Pflanzen verwendbar ist.

Bei der Aufnahme und Führung von diffuser Sonnensstrahlung kann aufgrund der verschiedenen Richtungen dieser Strahlung nur ein Anteil aufgenommen und in der gewünschten Art geführt werden. Bei der Aufnahme, Führung und Verteilung von direkter Sonnensstrahlung sollten die der Aufnahme, der Führung und/oder Verteilung dienenden Elemente zumindest an die dominante Strahlungsrichtung angepasst sein oder insbesondere an verschiedene Strahlungsrichtungen angepasst werden können.

Die Flächenleistungsdichte der Globalstrahlung stammt bei klarem Himmel zu 90% von der direkten und nur zu 10% von der diffusen Sonnenstrahlung. Bei bedecktem Himmel stammt die Flächenleistungsdichte zu 100% von der diffusen Sonnenstrahlung und liegt dabei unterhalb von 20%, meist sogar unterhalb von 10%, der Flächenleistungsdichte bei klarem Himmel. Aufgrund der hohen Flächenleistungsdichten der direkten Sonnenstrahlung bei klarem Himmel soll ein bevorzugtes Gewächshaus einen möglichst grossen Anteil der beim Gewächshaus zur Verfügung stehenden direkten Sonnenstrahlung zu allen für Pflanzen vorgesehenen Bereichen des Innenraums des Gewächshauses führen.

Die direkte Sonnenstrahlung ist entsprechend der jeweiligen Tages- und Jahreszeit und dabei entsprechend der geografischen Breite des Gewächshaus-Standortes ausgerichtet. Bei einem Standort auf der geografischen Breite von beispielsweise 47°, wie etwa im Schweizer Mittelland, liegt der Sonnenhöhenwinkel mittags um 12 Uhr am längsten Tag (21. Juni) bei 66.5° (90° + 23.5° - geographische Breite), bei Tag- und Nachtgleiche (21. März, 23. September) bei 43° (90° - geogr. Breite) und am kürzesten Tag (21. Dezember) bei 19.5° (90° - 23.5°- geogr. Breite). Bei einem Standort in einer Ebene steigt der Sonnenhöhenwinkel im Tagesverlauf von ca. 0° bei Sonnenaufgang zum Wert um 12 Uhr an und fällt dann bis Sonnenuntergang wieder auf ca. 0° ab. Wenn der Horizont bei Sonnenaufgang oder Sonnenuntergang von einer Erhöhung gebildet wird, so liegt der Sonnenhöhenwinkel bei Sonnenaufgang bzw. bei Sonnenuntergang über 0°.

Der Azimut des Sonnenstandes, bzw. der nach Himmelsrichtungen orientierte Horizontalwinkel, überstreicht von Sonnenaufgang bis Sonnenuntergang einen Winkelbereich. Bei einem Standort auf der geografischen Breite von beispielsweise 47° liegt der Azimut abhängig von der jeweiligen Jahreszeit zwischen Nord-Osten und Nord-Westen im Sommer, zwischen Osten und Westen im Frühling und Herbst und zwischen Süd-Osten und Süd-Westen im Winter. Weil der Sonnenstand am Mittag jeweils am höchsten ist und vor- sowie nachher in Azimutbereichen beidseits der Mittagsausrichtung im Wesentlichen symmetrisch verläuft, ist es vorteilhaft, wenn Elemente zur Aufnahme, Führung und Verteilung von direkter Sonnensstrahlung entsprechend dem bezüglich des mittäglichen Sonnenstandes symmetrischen Tagesverlauf ausgerichtet sind. Damit das Gewächshaus eine solche vorteilhafte Ausrichtung ermöglichen kann, umfasst es eine Längsachse, die bei der Platzierung eines Treibhauses im Wesentlichen in Nord-Süd-Richtung ausgerichtet wird.

Ein Aufnahmebereich zum Aufnehmen von Sonnenlicht, ein daran anschliessender Führungsbereich zum Einführen des Sonnenlichts in das Gewächshaus und eine im Gewächshaus angeordnete Lichtumlenkvorrichtung erstrecken sich in einer Draufsicht auf das Gewächshaus im Wesentlichen entlang dessen Längsachse. Mindestens auf einer Seite, vorzugsweise aber auf beiden Seiten, der Längsachse sind Tragvorrichtungen zum Tragen von Pflanzenbehältern bzw. Riegeln angeordnet. Weil ein in Nord-Süd-Richtung ausgerichtetes Gewächshaus direkte Sonnenstrahlung am Morgen von einer ersten Seite quer zur Längsachse und am Nachmittag von der zweiten Seite her erhält, werden der Aufnahmebereich und der Führungsbereich vorzugsweise so ausgebildet, dass von möglichst kurz nach Sonnenaufgang bis möglichst kurz vor Sonnenuntergang direkte Sonnenstrahlung ins Gewächshaus gelangt.

Damit seitlich im Gewächshaus angeordnete Pflanzenbehälter bzw. Riegel im Wesentlichen von Sonnenauf- bis Sonnenuntergang Sonnenstrahlung erhalten, umfasst die Lichtumlenkvorrichtung zwei voneinander abgewandte Umlenkflächen, die vom Aufnahmebereich aufgenommene und vom Führungsbereich gegen die Lichtumlenkvorrichtung geführte Sonnenstrahlung erhalten und gegen die zugeordneten Bereiche des Gewächshauses umlenken. Die beiden Umlenkflächen erstrecken sich über einen grossen Höhenbereich des Gewächshauses. Sie sind bei ihren oberen dem Aufnahmebereich sowie dem Führungsbereich zugeordneten Enden nahe beieinander und weisen gegen unten einen zunehmenden Abstand voneinander auf.

Durch den Führungsbereich gelangt Sonnenstrahlung auf der gesamten vertikalen Ausdehnung der Lichtumlenkvorrichtung auf die beiden Umlenkflächen. Die auf die Umlenkflächen gelangende Sonnenstrahlung ist in einem schmalen vertikalen Mittelbereich des Gewächshauses aufgenommen, wobei sich dieser Mittelbereich von den äusseren Rändern des Führungsbereichs zu den unteren Randlinien der Umlenkflächen erstreckt.

Das auf eine Umlenkfläche gelangende Sonnenlicht dieses schmalen vertikalen Mittelbereichs umfasst Strahlen mit einer vertikalen Richtungs-Komponente. Damit diese auf eine Umlenkfläche gelangenden Strahlen nach der Umlenkung eine genügend grosse horizontale Komponente aufweisen, umfasst die Umlenkfläche Teilbereiche mit Oberflächen deren Flächennormalen in vorgegebenen Ausrichtungsbereichen zu einer vertikalen Längsebene des Gewächshauses ausgerichtet sind. Die Flächennormale eines Teilbereichs kann auf eine zur vertikalen Längsebene senkrecht stehende vertikale Querebene projiziert werden. Der in dieser Projektion erkennbare Winkel zwischen der Flächennormalen und der Vertikalen geht aus der Ausrichtung der Umlenkfläche und der Ausrichtung der Teilbereiche relativ zur Umlenkfläche hervor. Aus diesem Winkel kann auch der Winkel zwischen einer Oberfläche eines Teilbereichs und der vertikalen Ebene durch die Längsachse bestimmt werden, weil diese beiden Winkel zusammen 90° ergeben. Wenn zwischen der Vertikalen und einer aussen an die Umlenkfläche angelegten Ebene ein Neigungswinkel von 4° gegeben ist und zwischen dieser aussen angelegten Ebene und den Oberflächen der Teilbereiche ein zusätzlicher Winkel von 35° ausgebildet ist, so verlaufen die Oberflächen der Teilbereiche unter einem Winkel von 39° zur Vertikalen.

Aus dem Winkel zwischen der Vertikalen und der Schnittlinie des Teilbereichs mit der vertikalen Querebene kann für einen von oben auf den Teilbereich treffenden Lichtstrahl abgeleitet werden, unter welchem Winkel zur Vertikalen er nach der Umlenkung weiterführt. Wenn der Winkel im Bereich von 45° bis 39° liegt, werden in vertikaler Richtung auf den Teilbereich gelangende Strahlen im Wesentlichen in eine horizontale Richtung umgelenkt und bei kleineren Winkeln, beispielsweise im Bereich von 38° bis 25°, leicht nach unten. Strahlen, die von seitlich oben auf die Teilbereiche gelangen, werden von Teilbereichen im Bereich mit grösseren Winkeln wieder nach seitlich oben reflektiert und von Teilbereichen im Bereich mit kleineren Winkeln horizontal oder leicht nach unten umgelenkt.

Zwischen nach seitlich oben gerichteten Teilbereichen gibt es mindestens einen nach seitlich unten gerichteten Teilbereich. Die Teilbereiche können sich in Richtung der Längsachse über die gesamte Länge der Umlenkflächen erstrecken. Es wäre aber auch möglich die Teilbereiche in Richtung der Längsachse in Abschnitte zu unterteilen, die in horizontaler Richtung von der Ausrichtung der Umlenkfläche abweichen. Wobei beispielsweise in einem Teil der Umlenkfläche Abschnitte so ausgerichtet sind, dass Lichtstrahlen die einen grossen Richtungsanteil entlang der Längsachse aufweisen von diesen Abschnitten quer von der Längsachse weg umgelenkt werden.

Aus der Projektion der Flächennormalen der Teilbereiche, bzw. der Flächennormalen deren Abschnitte, auf die horizontale Querebene geht hervor, welcher Winkel zwischen der senkrecht zur Längsachse stehenden Horizontalachse und der Schnittlinie des Teilbereichs, bzw. dessen Abschnitts, mit der horizontalen Querebene liegt. Aus diesem Winkel kann für einen von oben flach, bzw. mit einem grösseren Anteil in Richtung der Längsachse, auf den Teilbereich treffenden Lichtstrahl abgeleitet werden, unter welchem Winkel zur Längsachse er nach der Umlenkung weiterführt. Wenn beispielsweise im Winter direkte Sonnenstrahlung aufgrund des auch am Mittag tiefen Sonnenstandes relativ flach und somit mit einem grossen Anteil entlang der Längsachse in den schmalen vertikalen Mittelbereich eintritt, so können Teilbereiche bzw. Abschnitte davon so ausgerichtet sein, dass diese darauf treffenden Strahlen nach der Umlenkung vermehrt quer zur Längsachse verlaufen. Nebst Teilbereichen bzw. Abschnitten, die nach Norden gerichtete Sonnenstrahlen quer zur Längsachse umlenken, können Teilbereiche bzw. Abschnitte vorgesehen werden, die nach Süden gerichtete Sonnenstrahlen quer zur Längsachse umlenken. Teilweise nach Norden bzw. Süden gerichtete Sonnenstrahlen gibt es bei der Lichtumlenkvorrichtung auch dann, wenn im Führungsbereich Reflektionen stattfinden und selbst dann, wenn dabei die entlang der Längsachse gerichtete Komponente der Strahlungsrichtung reduziert wird.

Durch die Wahl eines spezifischen Musters von Teilbereichen, insbesondere mit Abschnitten, und deren Ausrichtung kann die Umlenkfläche ein gewünschtes Umlenkverhalten gewährleisten. Die Umlenkfläche wird so ausgebildet, dass sie eine Reflektion mit einem äusserst hohen Reflektionsgrad gewährleistet. Aus dem Bereich der Solartechnologie sind Reflektionsmaterialien, beispielsweise speziell beschichtete Aluminiumflächen bzw. -bleche bekannt, an denen mittels Pressen Teilbereiche bzw. Abschnitte davon in der gewünschten Ausrichtung bereitgestellt werden können. Weil nebst den Teilbereichen mit gewünschten Ausrichtungen immer auch Teilbereiche mit entgegengesetzten Ausrichtungen entstehen, können auch Lichtstrahlen die von unten auf solche entgegengesetzt ausgerichteten Teilbereiche gelangen von der Umlenkfläche weg umgelenkt werden.

Wenn im Gewächshaus nebst dem zugeführten Sonnenlicht auch Kunstlicht eingesetzt wird, so kann dieses sowohl von oben als auch von unten gegen die Umlenkfläche bzw. deren Teilbereiche gerichtet werden, um nach der Umlenkung auf dem gesamten Höhenbereich der Umlenkfläche in im Wesentlichen horizontalen Richtungen von der Umlenkfläche weg ins Gewächshaus verteilt zu werden. In bevorzugten Ausführungen wird das Kunstlicht von linearen Lichtquellen bereitgestellt, wobei solche linearen Lichtquellen seitlich am unteren Ende des Führungsbereichs und gegebenenfalls seitlich beim unteren Ende der Lichtumlenkvorrichtung angeordnet sind und dabei so ausgestaltet sind, dass das von ihnen ausgehende Licht zu einem möglichst grossen Anteil und möglichst homogen auf die Umlenkflächen verteilt wird.

Die Umlenkflächen können in Richtung der Längsachse aus Segmenten zusammengestellt werden. Gegebenenfalls ist zwischen solchen Segmenten ein Freiraum ausgebildet, der zur Belüftung und zur Zuführung mit CO₂ eingesetzt werden kann.

Damit die verschiedenen Lichtstrahlen möglichst im Gewächshaus verbleiben, bis sie auf Pflanzen treffen, sind auch verschiedene Innenseiten der Wand-, Boden- und gegebenenfalls Deckenbereiche als Licht reflektierende Oberflächen ausgebildet. Die Pflanzen werden in Behältern bzw. Riegeln platziert, welche vorzugsweise in Traggestellen nebeneinander und auf verschiedenen Niveaus übereinander so positioniert sind, dass horizontal und natürlich auch vertikal zwischen den Behältern Abstände gegeben sind, durch welche sich das Licht ausbreiten kann. Gegebenenfalls haben auch die Aussenseiten der Behälter Licht reflektierende Oberflächen oder insbesondere sind sie Licht durchlässig.

Es versteht sich von selbst, dass bei bevorzugten Ausführungsformen Deckenbereiche neben dem Führungsbereich und/oder auch Wandbereiche von Licht durchlässigem Material gebildet werden können, so dass durch diese Bereiche weiteres Licht in das Gewächshaus eintreten kann. Bei diesen Bereichen kann der Austritt von Licht dadurch reduziert werden, dass ein Material verwendet wird, das zwar von aussen Licht im gewünschten Wellenlängenbericht eintreten aber von innen nicht, oder zumindest weniger gut, austreten lässt.

Weil die Längsachse des Gewächshauses im Wesentlichen in Nord-Süd-Richtung ausgerichtet wird, ist es zweckmässig, wenn bei Gewächshäusern für mittlere und grosse nördliche Breiten zumindest die nach Norden gerichteten Wandbereiche auf ihrer Innenseite eine Reflektion mit einem äusserst hohen Reflektionsgrad gewährleisten. Damit wird das von innen auf diese Wandbereiche treffende Licht im Gewächshaus gehalten und lediglich kleine Anteile von diffusem Sonnenlicht können dann von Norden her nicht ins Gewächshaus gelangen. Die nach Süden gerichteten Wandbereiche sollen aber vorzugsweise von Licht durchlässigem Material gebildet werden, weil aus Süden am meisten Licht zum Gewächshaus gelangen kann.

Bei den nach Osten und Westen gerichteten Wandbereichen hängt es von der jeweiligen Umgebung des Gewächshauses ab, ob das erwartete Licht lichtdurchlässige Wandbereiche rechtfertigt, oder ein nach innen wirkender hoher Reflektionsgrad von Vorteil ist. Die Deckenbereiche beidseits des Aufnahmebereichs zum Aufnehmen von Sonnenlicht, bzw. des Führungsbereichs zum Einführen des Sonnenlichts in das Gewächshaus, werden ebenfalls vorzugsweise von Material gebildet, das von aussen nach innen Licht durchlässt und gegebenenfalls von innen nach aussen weniger Licht durchlässig ist.

Bei Gewächshäusern auf mittleren und grossen nördlichen oder südlichen Breiten gelangen die direkten Sonnenstrahlen relativ flach in den Aufnahme- und den Führungsbereich. Damit das Licht vom Führungsbereich nach unten geführt wird, umfasst der Führungsbereich zumindest beidseits der Längsachse Licht reflektierende seitliche Führungsflächen. Diese seitlichen Führungsflächen sind gegebenenfalls im Wesentlichen vertikal ausgerichtet, vorzugsweise nimmt aber der Abstand der einander gegenüberliegenden Führungsflächen zumindest in einem vertikalen Abschnitt von oben nach unten zu, so dass flach eintretende Sonnenstrahlen bei der Reflektion nach unten abgelenkt werden.

Wenn ein vorteilhafter Bereich des Ablenkungswinkels von saisonal unterschiedlichen Sonnenständen abhängt, ist es zweckmässig, den Verlauf des nach unten zunehmenden Abstands der einander gegenüberliegenden Führungsflächen verstellbar auszubilden. Dazu können beispielsweise im betroffenen vertikalen Abschnitt bei beiden seitlichen Führungsflächen Zusatzelemente mit einer jeweils gewünschten Neigung der gegen das innere des Führungsbereichs gerichteten Oberfläche vorgesehen werden, welche bei den seitlichen Führungsflächen einsetzbar bzw. entfernbar sind. Bei einer weiteren vorteilhaften Ausführungsform werden die seitlichen Führungsflächen im betroffenen vertikalen Abschnitt schwenkbar ausgebildet. Schwenkbare seitliche Führungsflächen sind vorzugsweise um ihre obere Seitenlinie schwenkbar. Damit die seitlichen Führungsflächen schwenkbar am Gewächshaus angeordnet werden können, umfasst das Gewächshaus ausserhalb der seitlichen Führungsflächen einen die Schwenkbewegung ermöglichenden Aufnahmebereich oder die schwenkbaren seitlichen Führungsflächen erstrecken sich vom Deckenbereich in den Innenraum, in dem genügend Platz für die Schwenkbewegung vorhanden ist. Die Höhe des Führungsbereichs liegt vorzugsweise im Bereich von 0.2m bis 0.6m.

Im Führungsbereich können auch quer zur Längsachse innere Führungsflächen angeordnet werden. Wenn der Sonnenstand am Mittag tief ist, kann es vorteilhaft sein, wenn die Lage der oberen Enden der inneren Führungsflächen von der der Sonne zugewandten Seite des Führungsbereichs gegen die von der Sonne abgewandte Seite hin schrittweise nach oben versetzt angeordnet sind. Gegebenenfalls werden die inneren Führungsflächen aber nur in einem von der sonnennahen Seite abgewandten Abschnitt des Führungsbereichs angeordnet. Die inneren Führungsflächen sind gegebenenfalls vertikal ausgerichtet, insbesondere aber am oberen Ende näher bei der sonnennahen Seite des Führungsbereichs als an ihrem unteren Ende, so dass flach entlang des Führungsbereichs eintretende Sonnenstrahlen bei der Reflektion nach unten umgelenkt werden. Analog zur Ausführungsform mit saisonal verstellbaren seitlichen Führungsflächen ist gegebenenfalls auch die Ausrichtung der inneren Führungsflächen verstellbar.

Zusätzlich zu den seitlichen und den inneren Führungsflächen kann auch zwischen den seitlichen Führungsflächen noch eine zentrale Führungsfläche angeordnet werden. Bei Ausführungsformen mit inneren Führungsflächen werden die inneren Führungsflächen und/oder die zentrale Führungsfläche aus Abschnitten aufgebaut. Die Führungsflächen werden so ausgebildet, dass sie eine Reflektion mit einem äusserst hohen Reflektionsgrad gewährleisten. Vorzugsweise werden die Führungsflächen von speziell beschichteten Aluminiumflächen bzw. -blechen gebildet. Die Führungsflächen bilden vom Aufnahmebereich gegen den Innenraum führende schachtartige Kanäle, in denen das oben eintretende Licht nach unten geführt wird. Mit den in der Draufsicht rasterartig verteilten schachtartigen Kanälen kann gewährleistet werden, dass die Lichtintensität über den gesamten horizontalen Querschnitt am unteren Ende des Führungsbereichs im Wesentlichen homogen ist. Bei den schachtartigen Kanälen kann zumindest ein Teil der in der Draufsicht als Ecken ausgebildeten Übergänge zwischen aneinander anschliessenden Führungsflächen als gekrümmte Übergangsflächen ausgebildet werden.

Im oder beim Führungsbereich ist vorzugsweise ein lichtdurchlässiger Abschluss des Gewächshauses angeordnet. Bei Gewächshäusern die auf hohen nördlichen oder südlichen Breiten eingesetzt werden, muss eine Lösung gesucht werden, bei der bei einem tiefen Sonnenstand mit einem grossen Strahlungsanteil entlang der Längsachse am lichtdurchlässigen Abschluss keine Totalreflektion auftritt. Der zur Totalreflektion definierte Grenzwinkel der Totalreflektion bzw. der kritische Winkel ist ein Winkel zwischen der Strahlungsrichtung des Lichtes und der Flächennormalen der Oberfläche, bei welcher der Brechungsindex ändert. Entsprechend erfolgt die Totalreflektion, wenn der Winkel zwischen der Strahlungsrichtung und der Flächennormalen grösser als der Grenzwinkel der Totalreflektion ist.

Um eine Totalreflektion zu vermeiden kann das Material bzw. der Aufbau des lichtdurchlässigen Abschlusses so gewählt werden, dass der Grenzwinkel der Totalreflektion bzw. der kritische Winkel möglichst gross ist. Gegebenenfalls wird der lichtdurchlässige Abschluss aus zur Längsachse geneigten Abschnitten aufgebaut, die so ausgerichtet sind, dass die bei tiefem Sonnenstand im Wesentlichen entlang der Längsachse eingestrahlten Sonnenstrahlen unter einem genügend kleinen Winkel zu den Flächennormalen der Abschnitte verläuft. Wenn das eingestrahlte Sonnenlicht im Führungsbereich nach unten umgelenkt wird, so ist es zweckmässig, wenn der lichtdurchlässige Abschluss nahe beim unteren Ende des Führungsbereichs angeordnet ist, weil das Sonnenlicht dort bereits einen kleineren Winkel zur Flächennormalen des lichtdurchlässigen Abschlusses aufweist, dadurch eine Totalreflektion verhindert werden kann und ein grosser Anteil des Lichts durch den lichtdurchlässigen Abschluss durchtritt.

Der Aufnahmebereich umfasst zumindest eine Eintrittsöffnung zum Führungsbereich. Die Eintrittsöffnung kann in einer Ebene des Deckenbereichs oder darüber angeordnet sein, wobei der Abstand zwischen der Eintrittsöffnung und dieser Ebene vorzugsweise im Bereich von 0m bis 0.6m liegt. Der Führungsbereich erstreckt sich bei einer über den Deckenbereich vorstehenden Eintrittsöffnung zumindest bis zum Deckenbereich. Vorzugsweise steht die Eintrittsöffnung nur wenig über den Deckenbereich vor und der Führungsbereich steht vom Deckenbereich nach unten in den Innenraum vor.

Vorzugsweise umfasst der Aufnahmebereich Zuführelemente, welche Licht zur Eintrittsöffnung leiten. Als Zuführelemente können beliebige optische Elemente, wie Reflektionsflächen, Linsen, Prismen oder gegebenenfalls Lichtleiter eingesetzt werden. Besonders geeignet sind Licht reflektierende Leitflächen, die Licht, welches nicht direkt auf die Eintrittsöffnung gelangen würde, gegen die Eintrittsöffnung leiten. Das von einer Leitfläche gegen die Eintrittsöffnung geleitete Licht kann direkt von der Leitfläche zur Eintrittsöffnung gelangen oder gegebenenfalls auch über mindestens eine weitere Leitfläche. In einer bevorzugten Ausführungsform sind auf zwei Seiten der Eintrittsöffnung je von einem zur Längsachse parallelen Öffnungsrand wegführende Leitflächen angeordnet. Die Leitflächen sind so ausgebildet, dass sie eine Reflektion des für das Pflanzenwachstum benötigten Anteils des Sonnenlichts mit einem äusserst hohen Reflektionsgrad gewährleisten. Aus dem Bereich der Solartechnologie sind Reflektionsmaterialien mit hohem Reflektionsgrad bekannt, beispielsweise speziell beschichtete Aluminiumflächen bzw. -bleche.

Weil der Sonnenstand bzw. die Einstrahlrichtung im Tagesverlauf ändert, ist es vorteilhaft, wenn die Ausrichtungen der Leitflächen so verstellbar sind, dass zur jeweiligen Tageszeit ein möglichst grosser Strahlungsanteil über die Leitflächen zur Eintrittsöffnung gelangt. Die Verstellung erfolgt vorzugsweise als Schwenkbewegung um eine Achse beim jeweiligen Öffnungsrand der Eintrittsöffnung. In den Zeitintervallen nach dem Sonnenaufgang und vor dem Sonnenuntergang ist es zweckmässig, wenn zusätzliches Licht lediglich von einer der beiden Leitflächen zur Eintrittsöffnung geleitet wird. Bei zunehmend höherem Sonnenstand kann auch Licht von der Leitfläche auf der Seite der Eintrittsöffnung, die der Sonne zugewandt ist, gegen die andere Leitfläche geleitet und von dieser zur Eintrittsöffnung weitergeleitet werden.

Die Schwenkausrichtung der Leitfläche auf der Seite der Eintrittsöffnung, welche von der Sonne abgewandt ist, wird vorzugsweise im Wesentlichen so an den jeweiligen Sonnenstand angepasst, dass die direkten Sonnenstrahlen nach der Reflektion an dieser Leitfläche eine Ausrichtung aufweisen, die in einer Projektion auf eine senkrecht zur Längsachse ausgerichtete vertikale Querebene vertikal verläuft. Dazu ist die Flächennormale der Leitfläche um den Winkel 45°-α/2 von der Horizontalen nach unten gedreht, wobei α dem Winkel des Sonnenstandes entspricht. Damit die so ausgerichtete Leitfläche vom Sonnenstand-Winkel 0° bis zu einem vorgegebenen Winkel α direktes Sonnenlicht auf die gesamte Breite der Eintrittsöffnung reflektiert, ist die Breite der Leitfläche, bzw. deren Ausdehnung von der Schwenklagerung bis zum freien Ende, grösser als das 1.4 fache der Breite der Eintrittsöffnung. Gegebenenfalls ist die Breite der Leitfläche verstellbar und nimmt mit zunehmendem Winkel α bis zu einer vorgegebenen maximalen Ausdehnung zu. Die maximale Ausdehnung wird so gewählt, dass die vorstehende Leitfläche ohne Beschädigungsgefahr grossen Windkräften ausgesetzt werden kann.

In einer Projektion auf eine parallel zur Längsachse ausgerichtete vertikale Längsebene sind die an der Leitfläche reflektierten Sonnenstrahlen entsprechend dem jeweiligen Sonnenstand geneigt und treffen ausgehend von der Reflektionsstelle in Richtung der Längsachse etwas weiter von der Sonne entfernt auf die Ebene mit der Eintrittsöffnung. In einen der Sonne zugewandten Endbereich der Eintrittsöffnung gelangt daher kein reflektiertes direktes Sonnenlicht. Um auch in diesen Bereich reflektiertes direktes Sonnenlicht einzutragen, werden gegebenenfalls die Leitflächen gegen die Sonne hin verlängert.

Das Gewächshaus kann als festes Gebäude oder als Teil eines festen Gebäudes ausgebildet werden. Dabei ist zumindest der Aufnahmebereich bei einer Dachfläche des Gebäudes angeordnet.

Vorzugsweise wird das Gewächshaus als mobile Vorrichtung, insbesondere in der Form eines Containers ausgebildet. Gegebenenfalls ist das mobile Gewächshaus so modulartig aufgebaut, dass auch mehrere mobile Gewächshäuser bzw. Module zu einem gesamthaften grossen Gewächshaus zusammengestellt werden können. Um den Transport zu erleichtern wird ein einzelnes Modul maximal gemäss einem gängigen Transportcontainer dimensioniert.

Bei bevorzugten Ausführungsformen mit der Zuführung von Kunstlicht ist es wichtig optimale Lichtquellen und die optimale Anordnungen derselben zu wählen. Bereits heute wird in konventionellen Gewächshäusern zur Optimierung des Wachstums von Tomaten, Salaten, Gemüsen und Blumen Kunstlicht eingesetzt. Um eine gewünschte Lichtstärke mit möglichst kleinem Energieaufwand breitstellen zu können, werden LED Lichtquellen verwendet. Für die Fotosynthese kann Licht mit Wellenlängen im Bereich von 400 bis 740 nm von Bedeutung sein, also vom blauen über den grünen und gelben bis zum roten Farbbereich, wobei Anteile im blauen und roten Bereich besonders wichtig sind. Weil kostengünstige LEDs je Licht in einem engen Wellenlängenbereich erzeugen, werden LEDs, insbesondere im blauen und im roten Bereich, kombiniert um ein für das Pflanzenwachstum nötiges Licht bereitzustellen.

Wissenschaftliche Versuche mit Salat zeigen, dass unterschiedliche Lichtintensitäten und Wellenlängen zu unterschiedlichen Nährwerten und unterschiedlichem Geschmack führen können. Licht kann auch die Form der Salatblätter beeinflussen. Dabei spielt es auch eine Rolle, in welcher Wachstumsphase welche Lichtzusammensetzung eingesetzt wird.

US 6 921 182 B2 beschreibt den Einsatz von Lampen, welche innerhalb eines Kreises beispielsweise 12 rote 660nm LEDs, 6 orange 612nm LEDs und eine blaue 470nm LED umfassen. Es wird davon ausgegangen, dass die von dieser LED Zusammenstellung erzeugte spektrale Intensitätsverteilung mit einem kleinen Maximum bei 470nm, einem etwas grösseren Maximum bei 612nm und einem dominanten Maximum bei 660nm gut an die Absorptionsspektren von Chlorophyl A und B angepasst ist, weil diese beiden Absorptionsspektren auch je Maxima im blauen und im roten Bereich aufweisen. Kommerziell erhältlich sind LED Lichtquellen für Gewächshäuser in der Form von grossen rechteckigen Lichtflächen und in der Form von Stäben, die entlang einer geraden Linie angeordnete LEDs umfassen.

US 2017/0023187 A1 beschreibt eine stabförmige Ausführung, bei der die LEDs auf einer Trägerfläche befestigt sind, der Träger mit der Trägerfläche in einer Glasröhre angeordnet ist und die Glasröhre mit Endkappen dicht verschlossen ist. Die von den LEDs erzeugte Wärme muss über Lufträume und durch das Glas der Glasröhre abgeführt werden. CH 706 718 A1 beschreibt eine ähnliche Lösung, bei der aber zwischen dem Träger mit den LEDs und einem transparenten Rohr eine Vergussmasse eingefüllt ist. Bei diesen beiden Lösungen besteht aufgrund schlechter Wärmeleitungseigenschaft die Gefahr, dass die LEDs überhitzt werden und nur eine ungenügende Lebensdauer erreichen. Zudem wird Licht nur in einen eng beschränkten Raumbereich abgestrahlt.

In einer bevorzugten Ausführungsform werden im Gewächshaus Kunstlichtröhren montiert, die LED Reihen auf mindestens zwei unterschiedlich ausgerichteten Trägerflächen eines Profils, vorzugsweise eines Metallprofils, insbesondere eines Aluminiumprofils, umfassen. Die Profile mit den LEDs sind in transparenten Röhren angeordnet. Im Querschnitt senkrecht zur Profillängsachse ist zwischen zwei in Umfangsrichtung um die Profillängsachse aneinander anschliessenden Trägerflächen ein Winkel im Bereich von 30° bis 160° ausgebildet. Dieser Winkel ist an die jeweilige Montageposition der Kunstlichtröhre im Gewächshaus angepasst. Die von den LEDs im Betrieb erzeugte Wärme wird von den Profilen aufgenommen. Die Profile sind so in den Röhren angeordnet, dass sie die aufgenommene Wärme gut an die Umgebung abgeben können.

Zum Erzielen einer guten Wärmeabführung wird beispielsweise zumindest ein Bereich auf der von den Trägerflächen abgewandten Seite des Profils als Durchströmungsbereich ausgebildet, so dass Wärme von durchströmender Luft abgeführt wird. Damit die LEDs nicht dem in Gewächshäusern auftretenden Spritzwasser oder insbesondere einer hohen Luftfeuchtigkeit ausgesetzt sind, wird der Bereich zwischen den Trägerflächen und der Röhre gegen die Umgebung dicht abgeschlossen. Dazu wird zumindest an den Enden der Röhre eine Dichtung angeordnet. Wenn die Profile in Umfangsrichtung geschlossen sind, so genügt die Abdichtung an den Enden, wobei diese vorzugsweise so erfolgt, dass das Innere des geschlossenen Profils zur Kühlung von Luft durchströmt werden kann. Wenn die Profile in Umfangsrichtung nicht geschlossen sind, also beispielsweise als Winkelprofile ausgebildet sind, so werden gegebenenfalls zusätzlich zwei Längsdichtungen eingesetzt. Die Längsdichtungen erzeugen je eine dichte Verbindung zwischen einer Längskante eines Profils und der Röhre. Zum Kühlen eines solchen Profils kann auf der von den Trägerflächen abgewandten Seiten des Profils Luft durchströmen.

Die Kunstlichtröhren werden vorzugsweise so montiert, dass das von ihnen abgestrahlte Licht möglichst optimal dem im Gewächshaus ausgebildeten Platz für Pflanzen zugeführt wird. Besonders vorteilhaft ist es, wenn die Profilachsen der Kunstlichtröhren in Richtung der Längsachse des Gewächshauses und/oder parallel zu Wandbereichen und im Wesentlichen senkrecht zur Längsachse des Gewächshauses ausgerichtet sind.

Die in Richtung der Längsachse des Gewächshauses ausgerichteten Kunstlichtröhren sind so angeordnet und ausgebildet, dass zumindest ein Teil des von diesen abgestrahlten Lichts über lichtreflektierende Teilbereiche der Lichtumlenkvorrichtung zumindest teilweise so reflektiert wird, dass es quer zur Längsachse von der Lichtumlenkvorrichtung weg gegen den mindestens einen im Innenraum vorgesehenen Platz für Pflanzen gerichtet ist. Dazu werden solche Kunstlichtröhren nahe bei der Lichtumlenkvorrichtung über den Bereich der Lichtumlenkvorrichtung verteilt angeordnet und von zwei in Umfangsrichtung um die Profillängsachse aneinander anschliessenden Trägerflächen der Kunstlichtröhren wird eine mit ihren LEDs gegen unten und die andere gegen oben auf die Lichtumlenkvorrichtung ausgerichtet. Um möglichst wenige Elemente im Gewächshaus anordnen zu müssen, können die in Richtung der Längsachse des Gewächshauses ausgerichteten Kunstlichtröhren als Längselemente der Regale eingesetzt werden.

Die senkrecht zur Längsachse des Gewächshauses ausgerichteten Kunstlichtröhren sind vertikal ausgerichtet und so angeordnet und ausgebildet, dass zumindest ein Teil des von diesen abgestrahlten Lichts direkt gegen den mindestens einen im Innenraum vorgesehenen Platz für Pflanzen gerichtet ist. Es versteht sich von selbst, dass solches Licht auch über lichtreflektierende Teilbereiche der Lichtumlenkvorrichtung zumindest teilweise so reflektiert wird, dass es quer zur Längsachse von der Lichtumlenkvorrichtung weg gegen den mindestens einen im Innenraum vorgesehenen Platz für Pflanzen gerichtet ist. Dazu werden solche Kunstlichtröhren nahe bei einer Wand, vorzugsweise bei einer parallel zur Längsachse verlaufenden Aussenwand im Wesentlichen in vertikaler Richtung ausgerichtet angeordnet. Die Positionen der Kunstlichtröhren in Richtung der Längsachse liegen bei eingesetzten Pflanzen jeweils zwischen zwei Reihen mit Pflanzen und die mindestens zwei Trägerflächen jeder Kunstlichtröhre sind so ausgerichtet, dass die LEDs der einen Trägerfläche im Wesentlichen gegen eine und der anderen Trägerfläche gegen die andere der beiden Pflanzenreihen gerichtet sind.

Die Pflanzen wachsen in Pflanzenbehältern, die auf dem Regal angeordnet werden können. Die Aussenflächen der Pflanzenbehälter sind vorzugsweise gut lichtreflektierend, so dass auch Licht von den Kunstlichtröhren über Reflektion an solchen Aussenflächen zu Pflanzen anderer Pflanzenbehälter gelangt. Wenn jeder LED Chip Licht innerhalb eines Raumwinkels, beispielsweise innerhalb von 120°, abstrahlt und auf einem 40cm langen Abschnitt jeder Trägerfläche der Kunstlichtröhre 32 LEDs angeordnet sind, so wird von diesem Abschnitt der Trägerfläche Licht mit ganz unterschiedlichen Ausbreitungswegen abgestrahlt. Dadurch kann gewährleistet werden, dass Licht über unterschiedliche Ausbreitungs- und Reflektionswege auch auf die verschieden ausgerichteten Blätter einer Pflanze auftrifft. Aufgrund der vielfältigen Abstrahlorte und - richtungen sowie der Vielfältigen Reflektionsmöglichkeiten an der Lichtumlenkvorrichtung und an den Pflanzenbehältern entsteht ein relativ homogenes Lichtfeld. Die Kombination von sich vertikal und horizontal erstreckenden Kunstlichtröhren gewährleistet eine optimale Homogenität des Lichtfeldes bzw. eine optimale Belichtung aller Pflanzenteile.

Eine Steuerung stellt sicher, dass die Kunstlichtröhren das für die Pflanzen jeweils optimale Licht, insbesondere mit einer zweckmässigen Intensität und Spektralverteilung, zu gewünschten Zeiten bereitstellen. Es hat sich gezeigt, dass bei schwachem Tageslicht und/oder bei Dämmerung mit dem Kunstlicht das Pflanzenwachstum aufrecht erhalten werden kann. Wenn die Pflanzen besonders schnell wachsen sollen, so kann auch während eines Teils der Nacht Licht zugeführt werden. Aus Energiespargründen wird gegebenenfalls abwechselnd das Kunstlicht ein- und ausgeschaltet, wobei die Dauer der eingeschalteten und der ausgeschalteten Phase je im Bereich von 30 Minuten bis 60 Minuten, insbesondere bei im Wesentlichen 45 Minuten liegt. Zumindest in der Mitte der Nacht wird aber eine Ruhephase ohne Licht eingehalten, beispielsweise von 23:00 bis 00:30 Uhr. Die Steuerung regelt vorzugsweise auch die Nährstoff- und Wasserzuführung, wobei alle geregelten Grössen aufeinander und insbesondere auch auf die Intensität des eingebrachten Sonnenlichtes abgestimmt werden. Gegebenenfalls passt die Steuerung die geregelten Einflüsse auch an den aktuellen Wachstumsstand der Pflanzen an.

Die Zeichnungen erläutern die Erfindung anhand von Ausführungsbeispielen, auf die sie aber nicht eingeschränkt ist. Dabei zeigen
- Fig. 1: eine perspektivische Darstellung eines Gewächshauses,
- Fig. 2: einen senkrecht zur Längsachse des Gewächshauses stehenden Querschnitt durch ein Gewächshaus,
- Fig. 3 und 4: Querschnitte durch das Gewächshaus mit schematisch dargestellten Strahlausbreitungen,
- Fig. 5 bis 7: Querschnitte durch Abschnitte von Umlenkflächen mit schematisch dargestellten Strahlausbreitungen,
- Fig. 8 bis 13: Querschnitte durch Aufnahme- und Führungsbereiche mit schematisch dargestellten Strahlausbreitungen,
- Fig. 14: eine perspektivische Darstellung eines Gewächshauses, wobei der Deckenbereich nicht eingezeichnet ist,
- Fig. 15: einen Querschnitt durch eine Kunstlichtröhre,
- Fig. 16: einen Querschnitt durch eine Kunstlichtröhre und durch einen Ausschnitt einer Lichtumlenkvorrichtung mit schematischer Strahlendarstellung,
- Fig. 17: eine schematische Strahlendarstellung auf einer Draufsicht auf zwei Reihen mit Pflanzen,
- Fig. 18: eine schematische Strahlendarstellung auf einer Seitenansicht mit einem Pflanzenbehälter für eine Reihe von Pflanzen, und
- Fig. 19: eine schematische Strahlendarstellung auf einer Seitenansicht mit zwei übereinander angeordneten Reihen von Pflanzen.

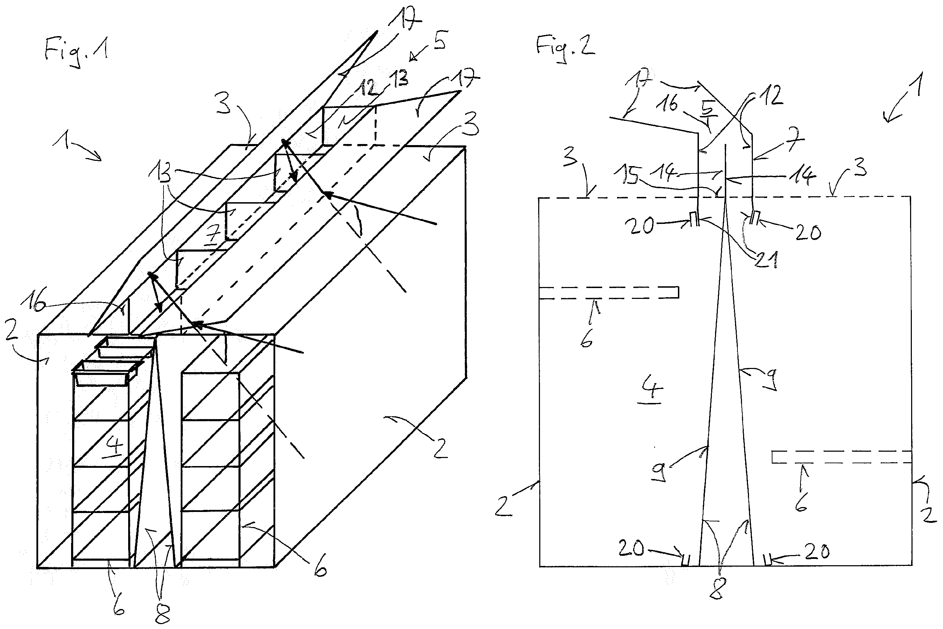

Fig. 1 bis 4 zeigen ein Gewächshaus 1 mit Wandbereichen 2 und Deckenbereichen 3, welche einen sich entlang einer Längsachse erstreckenden Innenraum 4 umschliessen. Im Deckenbereich 3 ist ein sich in Richtung der Längsachse erstreckender Aufnahmebereich 5 zum Aufnehmen von Sonnenlicht ausgebildet. Im Innenraum 4 steht in der dargestellten Ausführungsform auf beiden Seiten der Längsachse auf Regalen 6 Platz für Pflanzen bereit. An den Aufnahmebereich 5 schliesst gegen den Innenraum 4 hin ein Führungsbereich 7 zum Einführen des Sonnenlichts in den Innenraum 4 an. Im Innenraum 4 erstreckt sich eine reflektierende Lichtumlenkvorrichtung 8 im Wesentlichen in Richtung der Längsachse.

Die Lichtumlenkvorrichtung 8 umfasst zwei voneinander abgewandte Umlenkflächen 9, die sich über den überwiegenden Höhenbereich des Gewächshauses 1 erstrecken und bei ihren oberen dem Aufnahmebereich 5 sowie dem Führungsbereich 7 zugewandten Enden nahe beieinander liegen und gegen unten einen zunehmenden Abstand voneinander aufweisen.

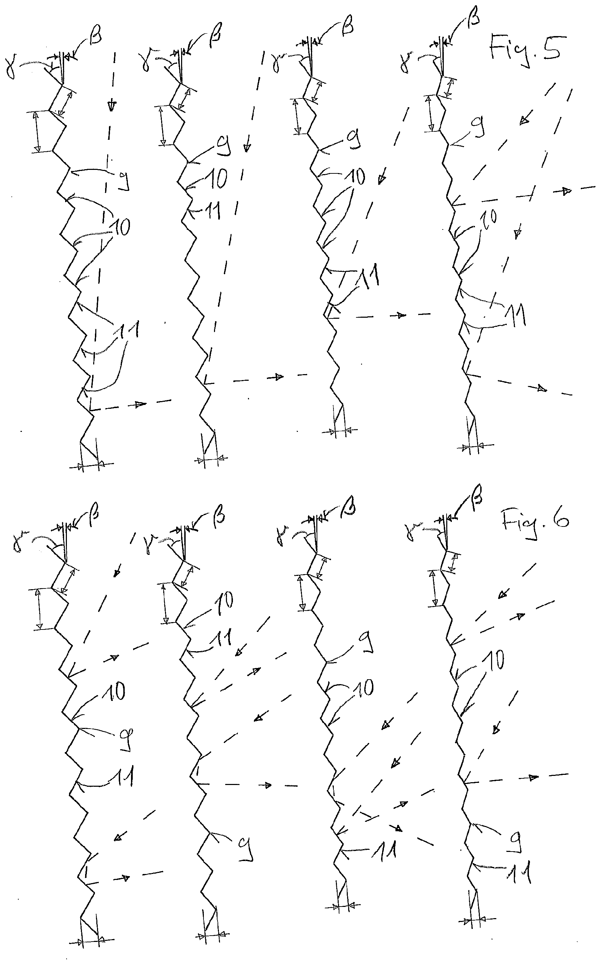

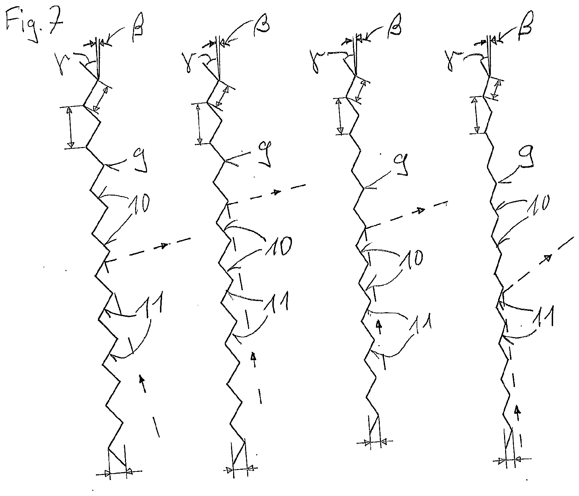

Gemäss den Figuren 5 bis 8 umfassen die Umlenkflächen 9 in Schnitten mit senkrecht zur Längsachse verlaufenden vertikalen Querebenen abwechselnd Teilbereiche 10 und 11 mit Schnittlinien in einer ersten und einer zweiten Ausrichtung, wobei Teilbereiche mit der ersten Ausrichtung von oben kommendes Licht und Teilbereiche mit der zweiten Ausrichtung von unten kommendes Licht reflektieren.

Zwischen der Vertikalen und einer aussen an die jeweilige Umlenkfläche 9 angelegten Ebene ist ein Neigungswinkel β von 2° bis 15°, vorzugsweise von im Wesentlichen 3° bis 6° ausgebildet. Zwischen dieser aussen angelegten Ebene und den Oberflächen der Teilbereiche 10 und 11 sind je entgegengesetzte Winkel γ im Bereich von 20° bis 40° bzw. -20° bis -40° ausgebildet. Entsprechend ist zwischen den Schnittlinien der ersten Ausrichtung und einer vertikalen Linie ein Winkel im Bereich von 15° bis 45°, insbesondere von 29° bis 44°, ausgebildet und zwischen den Schnittlinien der zweiten Ausrichtung und einer vertikalen Linie ein Winkel im Bereich von -10° bis -45°, insbesondere von -21° bis -36°, ausgebildet.

In den Schnittdarstellungen erstrecken sich ein Teilbereich 10 und ein Teilbereich 11 zusammen über eine Länge l im Bereich von 10 bis 30 mm, vorzugsweise von 12 bis 20 mm. Zwischen einer vorstehenden Spitze und einer Vertiefung ist eine Tiefe d im Bereich von 3 bis 20 mm, vorzugsweise von 3 bis 8 mm ausgebildet.

Die Flächennormalen der lichtreflektierenden Teilbereiche 10 der Umlenkflächen 9 bzw. der Lichtumlenkvorrichtung 8 werden so in vorgegebenen Richtungen ausgerichtet, dass durch den Führungsbereich 7 eintretendes Licht von den Oberflächen der Teilbereiche 10 zumindest teilweise so reflektiert wird, dass es quer zur Längsachse von der Lichtumlenkvorrichtung 8 weg gegen den mindestens einen im Innenraum 4 vorgesehenen Platz für Pflanzen gerichtet ist.

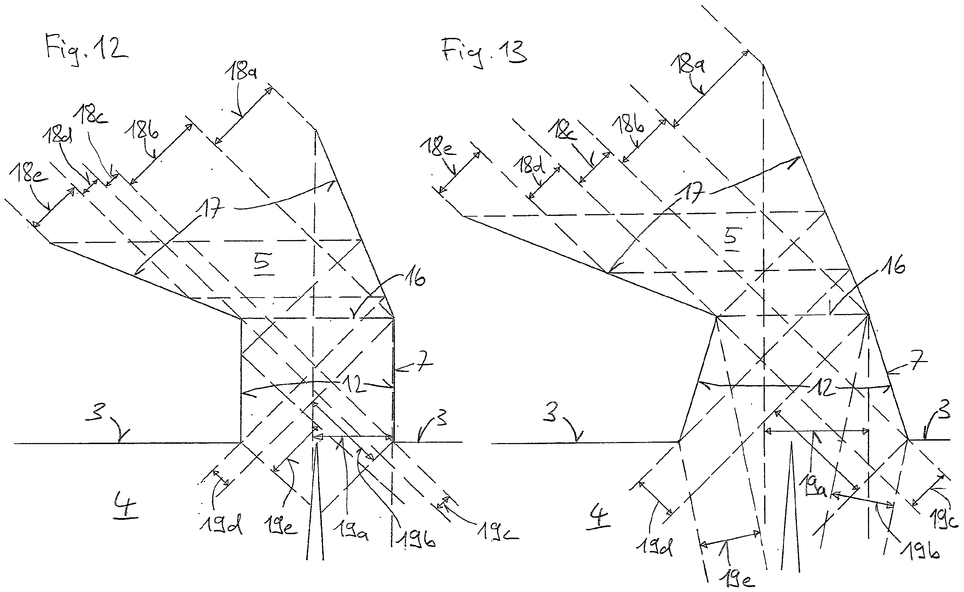

Gemäss den Figuren 1 bis 4 und 8 bis 13 umfasst der Führungsbereich 7 beidseits der Längsachse Licht reflektierende seitliche Führungsflächen 12, welche gegebenenfalls vertikal ausgerichtet sind, vorzugsweise nimmt aber der Abstand der einander gegenüberliegenden Führungsflächen 12 von oben nach unten zu, so dass flach eintretende Sonnenstrahlen bei der Reflektion nach unten abgelenkt werden.

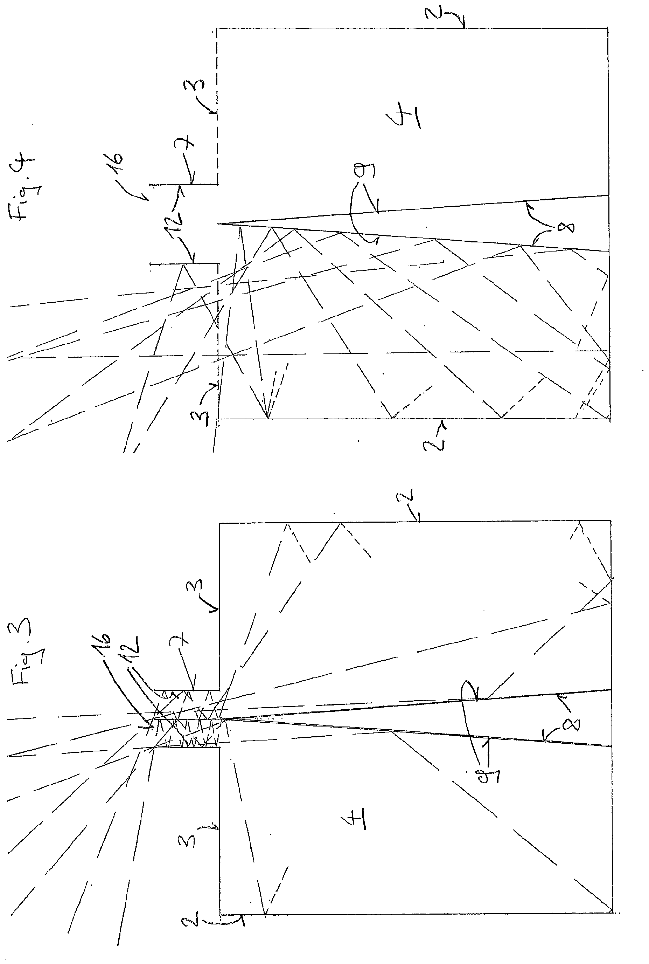

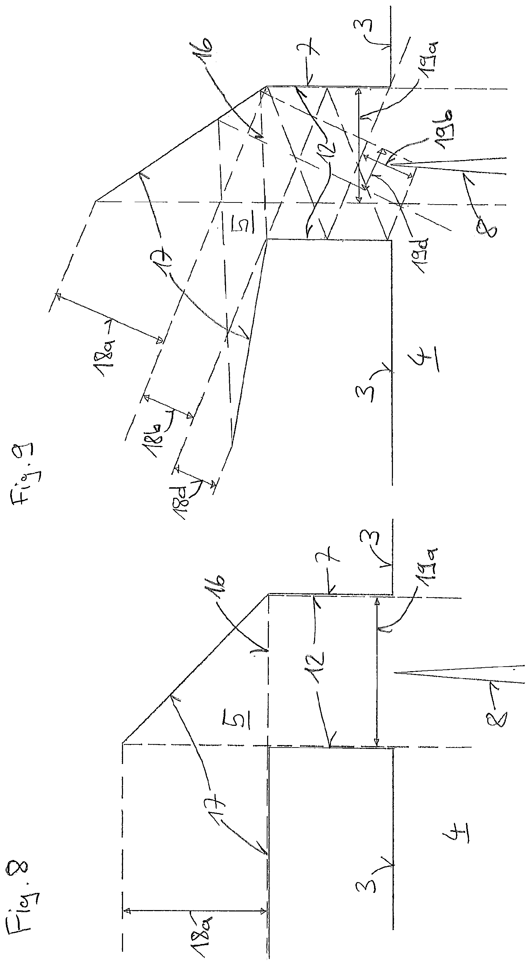

Fig. 3 zeigt mit den unterbrochenen Linien diffuses Sonnenlicht das durch den Führungsbereich 7 in den Innenraum 4 gelangt. Fig. 4 zeigt mit den unterbrochenen Linien diffuses Sonnenlicht das durch einen transparenten Deckenbereich 3 neben dem Führungsbereich 7 in den Innenraum 4 gelangt. Die Figuren 8 bis 13 zeigen mit den unterbrochenen Linien direktes Sonnenlicht das durch den Führungsbereich 7 in den Innenraum 4 gelangt.

Im Führungsbereich 7 sind bei der Ausführungsform gemäss Fig. 1 quer zur Längsachse innere Führungsflächen 13 angeordnet. Gegebenenfalls werden diese nur in einem von der sonnennahen Seite abgewandten Abschnitt des Führungsbereichs 7 angeordnet und sind gegebenenfalls vertikal ausgerichtet, insbesondere aber am oberen Ende näher bei der sonnennahen Seite des Führungsbereichs 7 als an ihrem unteren Ende, so dass flach entlang des Führungsbereichs 7 eintretende Sonnenstrahlen bei der Reflektion nach unten umgelenkt werden.

Gemäss Fig. 2 sind zusätzlich zu den seitlichen und den inneren Führungsflächen 12 und 13 zwischen den seitlichen Führungsflächen 12 noch zentrale Führungsflächen 14 angeordnet. Von den Führungsflächen 12 bis 14 werden vom Aufnahmebereich 5 gegen den Innenraum 4 führende schachtartige Kanäle gebildet, in denen das oben eintretende Licht nach unten geführt wird. Mit den schachtartigen Kanälen kann gewährleistet werden, dass die Lichtintensität über den gesamten horizontalen Querschnitt am unteren Ende des Führungsbereichs 7 im Wesentlichen homogen ist. Im oder beim Führungsbereich 7 ist vorzugsweise ein lichtdurchlässiger Abschluss 15 des Gewächshauses 1 angeordnet.

Der Aufnahmebereich 5 umfasst eine Eintrittsöffnung 16 zum Führungsbereich 7 und Zuführelemente, wobei die Zuführelemente Licht zur Eintrittsöffnung 16 leiten. Die in den Figuren 1, 2 und 8 bis 13 dargestellten Zuführelemente sind Licht reflektierende Leitflächen 17, die Licht, welches nicht direkt auf die Eintrittsöffnung 16 gelangen würde, gegen die Eintrittsöffnung 16 leiten. Das von einer Leitfläche 17 gegen die Eintrittsöffnung 16 geleitete Licht kann direkt von der Leitfläche 17 zur Eintrittsöffnung 16 gelangen oder gegebenenfalls auch über mindestens eine weitere Leitfläche 17. In der dargestellten Ausführungsform sind auf beiden Seiten der Eintrittsöffnung 16 je von einem zur Längsachse parallelen Öffnungsrand wegführende Leitflächen 17 angeordnet. Die Leitflächen 17 sind so ausgebildet, dass sie eine Reflektion des für das Pflanzenwachstum benötigten Anteils des Sonnenlichts mit einem äusserst hohen Reflektionsgrad gewährleisten. Aus dem Bereich der Solartechnologie sind Reflektionsmaterialien mit hohem Reflektionsgrad bekannt, beispielsweise speziell beschichtete Aluminiumflächen bzw. -bleche.

Die Ausrichtungen der Leitflächen 17 ist mit nicht dargestellten Betätigungseinrichtungen so verstellbar, dass zur jeweiligen Tageszeit ein möglichst grosser Strahlungsanteil über die Leitflächen 17 zur Eintrittsöffnung 16 gelangt. Die Verstellung erfolgt als Schwenkbewegung um eine Achse beim jeweiligen Öffnungsrand der Eintrittsöffnung 16. Fig. 8 zeigt eine Situation beim Sonnenaufgang oder Sonnenuntergang, bei der zusätzliches Licht lediglich von einer der beiden Leitflächen 17 zur Eintrittsöffnung 16 geleitet wird. Fig. 9, 10, 12 und 13 zeigen Situationen bei höheren Sonnenständen aber unterhalb des maximalen Sonnenstandes, bei denen auch direktes Sonnenlicht von der Leitfläche 17 auf der Seite der Eintrittsöffnung 16, die der Sonne zugewandt ist, gegen die andere Leitfläche 17 geleitet und von dieser zur Eintrittsöffnung 16 weitergeleitet wird.

Die Schwenkausrichtung der Leitfläche 17 auf der Seite der Eintrittsöffnung 16, welche von der Sonne abgewandt ist, wird vorzugsweise im Wesentlichen so an den jeweiligen Sonnenstand angepasst, dass die direkten Sonnenstrahlen nach der Reflektion an dieser Leitfläche 17 eine Ausrichtung aufweisen, die in einer Projektion auf eine senkrecht zur Längsachse ausgerichtete vertikale Querebene vertikal verläuft. Dazu ist die Flächennormale der Leitfläche 17 um den Winkel 45°-α/2 von der Horizontalen nach unten gedreht, wobei α dem Winkel des Sonnenstandes entspricht.

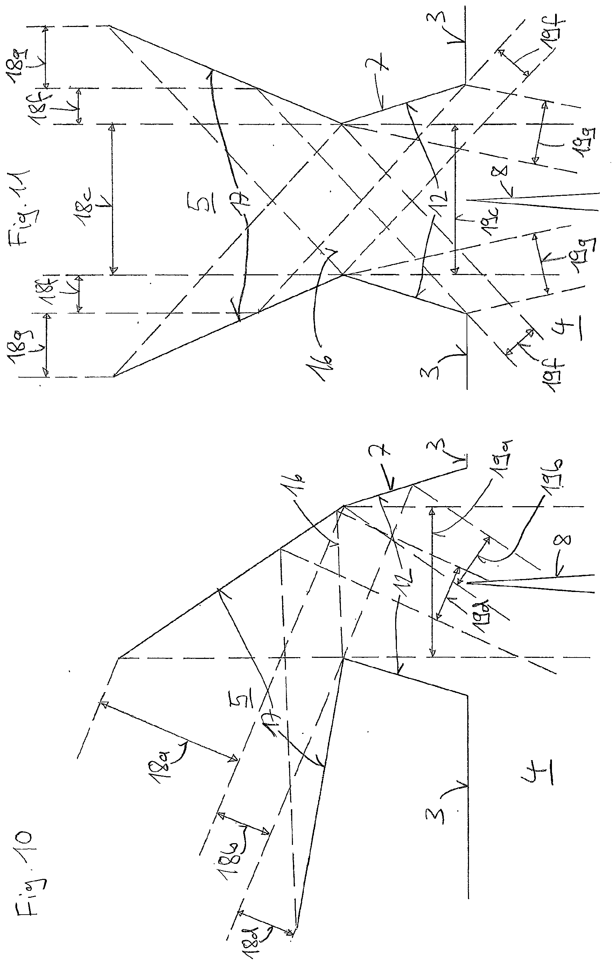

Bei der Ausführung gemäss Fig. 10 hat die Leitfläche 17 für einen Sonnenstand-Winkel von 22.5° eine Breite die grösser ist als das 1.4 fache der Breite der Eintrittsöffnung 16. Dadurch wird direktes Sonnenlicht auf die gesamte Breite der Eintrittsöffnung 16 reflektiert. Bei einer bevorzugten Ausführungsform ist die Breite der Leitfläche verstellbar und nimmt mit zunehmendem Sonnenstand-Winkel bis zu einer vorgegebenen maximalen Ausdehnung zu. Die maximale Ausdehnung wird so gewählt, dass die vorstehende Leitfläche ohne Beschädigungsgefahr grossen Windkräften ausgesetzt werden kann.

Auf den Fig. 8 bis 13 sind die auf den Aufnahmebereich auftreffenden direkten Sonnenstrahlen mit ihren Wegen in den Innenraum 4 dargestellt, wobei Strahlenbereiche mit unterschiedlichen Eintrittswegen unterschiedlich bezeichnet sind. Ein auf den Aufnahmebereich auftreffender erster Strahlbereich 18a des direkten Sonnenlichts gelangt nach der Reflektion an einer Leitfläche 16 in zur Längsachse parallelen vertikalen Längsebenen eines ersten Eintrittsbereich 19a in den Innenraum 4. Ein zweiter Strahlbereich 18b gelangt nach einmaliger oder mehrmaliger Reflektion an Führungsflächen 12 bis 14 in einem zweiten Eintrittsbereich 19b in den Innenraum 4. Aus dem Vergleich der Fig. 9 und 10 bzw. 12 und 13 geht hervor, dass der zweite Eintrittsbereich 19b bei Ausführungsformen mit geneigten Führungsflächen 12 besser nach unten und besser auf die Lichtumlenkvorrichtung 8 gerichtet ist. Ein dritter Strahlbereich 18c gelangt ohne Reflektion in einem dritten Eintrittsbereich 19c direkt in den Innenraum 4. Ein vierter Strahlbereich 18d gelangt nach zweimaliger Reflektion an Leitflächen 17 in einem vierten Eintrittsbereich 19d in den Innenraum 4. Ein fünfter Strahlbereich 18e gelangt nach zweimaliger Reflektion an Leitflächen 17 und einer Reflektion an einer Führungsfläche 12 in einem fünften Eintrittsbereich 19e in den Innenraum 4.

Fig. 11 zeigt eine Situation bei der am Mittag Licht auf einen in Nord-Süd-Richtung ausgerichteten Aufnahmebereich 5 trifft, wobei ein breiter dritter Strahlbereich 18c direkt in den Innenraum 4 gelangt. Ein sechster und ein siebter Strahlbereich 18f und 18g gelangt in den zugeordneten sechsten bzw. siebten Eintrittsbereich 19f und 19g. Beim sechsten Strahlengang wird der Strahlbereich nur an einer Leitfläche 17 reflektiert und beim siebten Strahlengang nur an einer Führungsfläche 12.

Mit den Leit- und Führungsflächen 17, 12-14 sind verschiedene Strahlführungen erzielbar, welche auch durch Anpassungen der Dimensionierung und Ausrichtung der eingesetzten reflektierenden Flächen darauf hin optimiert werden können, dass ein möglichst grosser Anteil der in den Innenraum 4 geführten direkten Sonnenstrahlung auf die Lichtumlenkvorrichtung 8 gerichtet ist und zwar vorzugsweise so, dass die darauf erfolgende Umlenkung das Licht in der gewünschten Weise den Pflanzen zuführt.

In Fig. 1 ist erkennbar, dass in einer Projektion auf eine parallel zur Längsachse ausgerichtete vertikale Längsebene die an der Leitfläche 17 reflektierten Sonnenstrahlen (Pfeile) entsprechend dem jeweiligen Sonnenstand geneigt sind und ausgehend von der Reflektionsstelle in Richtung der Längsachse etwas weiter von der Sonne entfernt auf die Ebene mit der Eintrittsöffnung 16 treffen. Damit auch in den der Sonne zugewandten Endbereich der Eintrittsöffnung 16 reflektiertes Sonnenlicht gelangt, sind die Leitflächen 17 gegen die Sonne hin etwas verlängert.

Bei der Ausführungsform gemäss Fig. 2 kann im Gewächshaus 1 nebst dem zugeführten Sonnenlicht auch Kunstlicht eingesetzt werden. Dieses wird vorzugsweise sowohl von oben als auch von unten gegen die Umlenkflächen 9 bzw. deren Teilbereiche 10, 11 gerichtet, um nach der Umlenkung auf dem gesamten Höhenbereich der Umlenkflächen 9 in im Wesentlichen horizontalen Richtungen von den Umlenkflächen 9 weg ins Gewächshaus 1 verteilt zu werden. Das Kunstlicht wird vorzugsweise von linearen Lichtquellen 20 bereitgestellt, wobei solche linearen Lichtquellen 20 seitlich am unteren Ende des Führungsbereichs 7 und seitlich bei den unteren Enden der Umlenkflächen 9 angeordnet sind. Die linearen Lichtquellen 20 sind so ausgestaltet sind, dass das von ihnen ausgehende Licht zu einem möglichst grossen Anteil und möglichst homogen auf die Umlenkflächen 9 verteilt wird.

In der dargestellten Ausführungsform sind die oberen linearen Lichtquellen 20 aussen an von oben nach unten etwas zusammenlaufenden Konzentrierelementen 21 angeordnet. Diese Konzentrierelemente 21 sind auch unabhängig von Lichtquellen vorteilhaft, wenn sie so ausgelegt werden, dass Lichtstrahlen, welche beim unteren Ende des Führungsbereichs 7 seitlich nach aussen verlaufen, gegen die Umlenkflächen 9 reflektiert werden. Anstelle der beiden Konzentrierelemente 21 können auch übereinander angeordnete Lamellen mit ähnlicher Ausrichtung eingesetzt werden.

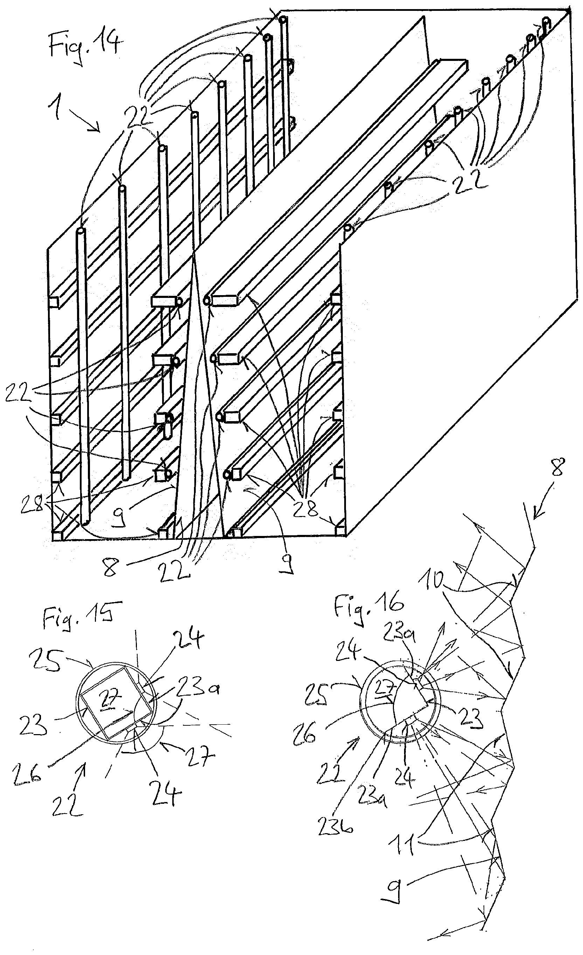

Fig. 14 zeigt eine Ausführungsform, bei der das Gewächshaus 1 im Innenraum 4 angeordnete Kunstlichtröhren 22 umfasst. Eine Kunstlichtröhre 22 umfasst, wie beispielshaft in Fig. 15 dargestellt, je LED Reihen auf mindestens zwei unterschiedlich ausgerichteten Trägerflächen 23a eines sich entlang einer Profilachse erstreckenden Profils 23. Das Profil 23 mit LEDs 24 ist in einer transparenten Röhre 25 angeordnet. Im Querschnitt senkrecht zur Profillängsachse ist zwischen zwei in Umfangsrichtung um die Profillängsachse aneinander anschliessenden Trägerflächen 23a ein Profilwinkel 26 ausgebildet, der im Bereich von 30° bis 160° liegt. Der Profilwinkel 26 wird so gewählt, dass die LEDs 24 jeder Trägerfläche 23a Licht innerhalb eines Strahlwinkels 27 in eine gewünschte Richtung abstrahlen.

Fig. 16 zeigt eine Kunstlichtröhre 22, mit der Licht über eine Umlenkfläche 9 der Lichtumlenkvorrichtung 8 im Gewächshaus 1 verteilt wird. Der Profilwinkel 26 ist an den Abstand der Kunstlichtröhre 22 von der Umlenkfläche 9 und an die Ausrichtung und Ausdehnung der Teilbereiche 10 und 11 angepasst. Das von den beiden LED Reihen in die entsprechenden Strahlwinkel 27 abgestrahlte Licht soll optimal in den Innenraum 4 reflektiert werden.

Damit die von den LEDs 24 erzeugte Wärme gut abgeführt werden kann, wird zumindest ein Bereich auf der von den Trägerflächen 23a abgewandten Seite des Profils 23 als Durchströmungsbereich 27 ausgebildet, so dass Wärme von durchströmender Luft abgeführt wird. Damit die LEDs 24 nicht dem in Gewächshäusern auftretenden Spritzwasser oder insbesondere einer hohen Luftfeuchtigkeit ausgesetzt sind, wird der Bereich zwischen den Trägerflächen 23a mit LEDs 24 und der Röhre 25 gegen die Umgebung dicht abgeschlossen. Dazu wird zumindest an den Enden der Röhre eine Dichtung angeordnet. Wenn das Profil 23 wie in Fig. 15 in Umfangsrichtung geschlossen ist, so genügt die Abdichtung an den Enden, wobei diese so erfolgt, dass das Innere des geschlossenen Profils 23 einen zur Kühlung von Luft durchströmbaren Durchströmungsbereich 27 bildet. Wenn das Profil 23 wie in Fig. 16 als Winkelprofil in Umfangsrichtung nicht geschlossen ist, so werden gegebenenfalls zusätzlich zwei Längsdichtungen eingesetzt. Die Längsdichtungen erzeugen je eine dichte Verbindung zwischen einer Längskante 23b des Profils 23 und der Röhre 25. Zum Kühlen eines solchen Profils 23 kann auf der von den Trägerflächen 23a abgewandten Seiten des Profils 23 Luft durchströmen.

In der Ausführungsform gemäss Fig. 14 umfasst die Tragvorrichtungen zum Tragen von Pflanzenbehältern je auf beiden Seiten der beiden im Innenraum 4 vorgesehenen Plätze für Pflanzen horizontal in Richtung der Längsachse des Gewächshauses verlaufende Tragprofile 28. Die Profilachsen der Kunstlichtröhren 22, welche ihr Licht über Reflektion an der Umlenkfläche 9 gegen den Platz für Pflanzen führen, sind in Richtung der Längsachse des Gewächshauses 1 ausgerichtet und vorzugsweise an Tragprofilen 28 angeordnet. Die Profilachsen der Kunstlichtröhren 22, welche parallel zu Wandbereichen und im Wesentlichen senkrecht zur Längsachse des Gewächshauses 1 ausgerichtet sind, werden so angeordnet und ausgebildet, dass zumindest ein Teil des von diesen abgestrahlten Lichts direkt gegen den mindestens einen im Innenraum 4 vorgesehenen Platz für Pflanzen gerichtet ist.

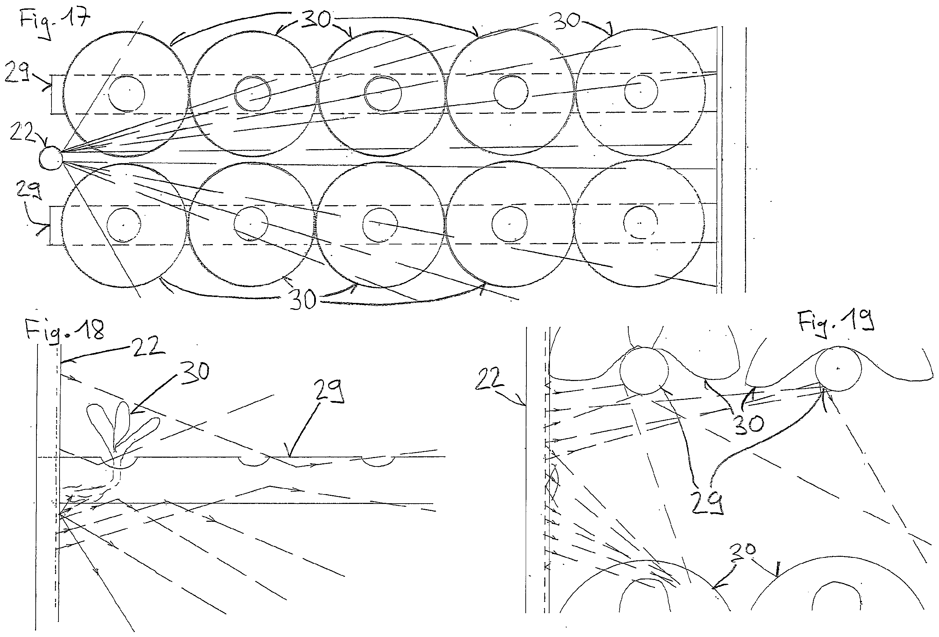

Fig. 17 bis 19 veranschaulichen mit schematischen Strahlendarstellungen die Lichtausbreitung ausgehend von den Kunstlichtröhren 22 mit senkrecht zur Längsachse des Gewächshauses 1 ausgerichteten Profilachsen. Die Draufsicht gemäss Fig. 17 zeigt eine Kunstlichtröhre 22, die zwischen zwei Pflanzenbehältern 29 mit schematisch dargestellten Pflanzen 30 angeordnet ist. Bei dieser Kunstlichtröhre 22 ist der Profilwinkel 26 deutlich grösser als 90° beispielsweise bei im Wesentlichen 150° ausgebildet. So kann gewährleistet werden, dass die beiden LED Reihen im Wesentlichen je auf die Pflanzen 30 eines der beiden Pflanzenbehälter 29 ausgerichtet sind. Die Seitenansicht gemäss Fig. 18 zeigt, dass das von den LEDs 24 erzeugte Licht auch vom Pflanzenbehälter 29 reflektiert wird, wenn dieser eine lichtreflektierende Aussenfläche aufweist. Fig. 19 zeigt eine Kunstlichtröhre 22, die bei einer senkrecht zur Längsachse des Gewächshauses 1 ausgerichteten Wand angeordnet ist. Das Licht der Kunstlichtröhre 22 ist zu einem grösseren Anteil quer zur Längsrichtung der Pflanzenbehälter 29 ausgerichtet. Entsprechend der im Querschnitt runden Form der Pflanzbehälter 29 wird das auf sie treffende Licht in unterschiedlichen Richtungen auf die Pflanzen 30 der darunter angeordenten Pflanzbehälter 29 reflektiert.

## Patentansprüche

1. Gewächshaus (1) mit Wand- und Deckenbereichen (2, 3), welche einen sich entlang einer Längsachse erstreckenden Innenraum (4) zumindest teilweise umschliessen, wobei beim Deckenbereich (3) ein sich in Richtung der Längsachse erstreckender Aufnahmebereich (5) zum Aufnehmen von Sonnenlicht ausgebildet ist, im Innenraum (4) mindestens auf einer Seite der Längsachse Platz für Pflanzen bereitsteht, an den Aufnahmebereich (5) gegen den Innenraum (4) hin ein Führungsbereich (7) zum Einführen des Sonnenlichts in den Innenraum (4) anschliesst, wobei sich im Innenraum (4) eine reflektierende Lichtumlenkvorrichtung (8) im Wesentlichen in Richtung der Längsachse erstreckt, die Lichtumlenkvorrichtung (8) lichtreflektierende Teilbereiche (10, 11) umfasst und die Flächennormalen der Oberflächen dieser Teilbereiche (10) so in vorgegebenen Richtungen ausgerichtet sind, dass durch den Führungsbereich (7) eintretendes Licht von Teilbereichen (10) zumindest teilweise so reflektiert wird, dass es quer zur Längsachse von der Lichtumlenkvorrichtung (8) weg gegen den mindestens einen im Innenraum (4) vorgesehenen Platz für Pflanzen gerichtet ist, **dadurch gekennzeichnet, dass** die Lichtumlenkvorrichtung (8) zwei voneinander abgewandte Umlenkflächen (9) umfasst, die sich über den überwiegenden Höhenbereich des Gewächshauses (1) erstrecken und bei ihren oberen dem Aufnahmebereich (5) sowie dem Führungsbereich (7) zugewandten Enden nahe beieinander liegen und gegen unten einen zunehmenden Abstand voneinander aufweisen, wobei die Umlenkflächen (9) in Schnitten mit senkrecht zur Längsachse verlaufenden vertikalen Querebenen abwechselnd Teilbereiche (10, 11) mit Schnittlinien in einer ersten und einer zweiten Ausrichtung umfassen und Teilbereiche (10) mit der ersten Ausrichtung von oben kommendes Licht und Teilbereiche (11) mit der zweiten Ausrichtung von unten kommendes Licht gegen den Platz für Pflanzen reflektieren.

2. Gewächshaus (1) nach Anspruch 1, **dadurch gekennzeichnet, dass** zwischen den Schnittlinien der ersten Ausrichtung und einer vertikalen Linie ein Winkel im Bereich von 15° bis 45°, insbesondere von 29° bis 44°, ausgebildet ist und dass gegebenenfalls zwischen den Schnittlinien der zweiten Ausrichtung und einer vertikalen Linie ein Winkel im Bereich von -10° bis -45°, insbesondere von -21° bis -36°, ausgebildet ist.

3. Gewächshaus (1) nach Anspruch 1 oder 2, **dadurch gekennzeichnet, dass** zwischen der Vertikalen und einer aussen an die jeweilige Umlenkfläche (9) angelegten Ebene ein Neigungswinkel von 2° bis 15° vorzugsweise von im Wesentlichen 3° bis 6° gegeben ist und insbesondere zwischen dieser aussen angelegten Ebene und den Teilbereiche (10, 11) mit Schnittlinien in einer ersten und einer zweiten Ausrichtung je entgegengesetzte Winkel im Bereich von 20° bis 40° bzw. -20° bis - 40° ausgebildet sind.

4. Gewächshaus (1) nach einem der Ansprüche 1 bis 3, **dadurch gekennzeichnet, dass** der Führungsbereich (7) beidseits der Längsachse Licht reflektierende seitliche Führungsflächen (12) umfasst, welche gegebenenfalls vertikal ausgerichtet sind, vorzugsweise nimmt aber der Abstand der einander gegenüberliegenden seitlichen Führungsflächen (12) von oben nach unten zu, so dass flach eintretende Sonnenstrahlen bei der Reflektion nach unten abgelenkt werden, wobei die Ausrichtungen der seitlichen Führungsflächen gegebenenfalls verstellbar sind.

5. Gewächshaus (1) nach Anspruch 4, **dadurch gekennzeichnet, dass** im Führungsbereich (7) quer zur Längsachse innere Führungsflächen (13) angeordnet sind, vorzugsweise obere Enden der aufeinander folgenden inneren Führungsflächen (13) ausgehend von der sonnennahen Seite schrittweise höher liegen oder insbesondere innere Führungsflächen (13) nur in einem von der sonnennahen Seite abgewandten Abschnitt des Führungsbereichs (7) eingesetzt sind, wobei die inneren Führungsflächen (13) gegebenenfalls vertikal ausgerichtet sind, insbesondere aber am oberen Ende näher bei der sonnennahen Seite des Führungsbereichs (7) als an ihrem unteren Ende sind, so dass flach in den Führungsbereich (7) eintretende Sonnenstrahlen bei der Reflektion nach unten umgelenkt werden, wobei die Ausrichtung der inneren Führungsflächen gegebenenfalls verstellbar ist.

6. Gewächshaus (1) nach Anspruch 4 oder 5, **dadurch gekennzeichnet, dass** die Führungsflächen vom Aufnahmebereich gegen den Innenraum (4) führende schachtartige Kanäle bilden, welche in der Draufsicht rasterartig angeordnet sind.

7. Gewächshaus (1) nach einem der Ansprüche 1 bis 6, **dadurch gekennzeichnet, dass** der Aufnahmebereich (5) eine Eintrittsöffnung (16) zum Führungsbereich (7) und Zuführelemente umfasst, wobei die Zuführelemente Licht zur Eintrittsöffnung leiten.

8. Gewächshaus (1) nach Anspruch 7, **dadurch gekennzeichnet, dass** die Zuführelemente als Licht reflektierende Leitflächen (17) ausgebildet sind, welche Licht, das nicht direkt auf die Eintrittsöffnung (16) gelangen würde, gegen die Eintrittsöffnung (16) leiten, wobei die Leitflächen (17) vorzugsweise auf zwei Seiten der Eintrittsöffnung (16) je von einem zur Längsachse parallelen Öffnungsrand wegführend angeordnet sind.

9. Gewächshaus (1) nach Anspruch 8, **dadurch gekennzeichnet, dass** die Ausrichtungen der Leitflächen (17) so verstellbar sind, dass zur jeweiligen Tageszeit ein möglichst grosser Strahlungsanteil über die Leitflächen (17) zur Eintrittsöffnung (16) gelangt und dazu die Verstellung vorzugsweise als Schwenkbewegung um eine Achse beim jeweiligen Öffnungsrand der Eintrittsöffnung (16) erfolgt.

10. Gewächshaus (1) nach einem der Ansprüche 1 bis 9, **dadurch gekennzeichnet, dass** es im Innenraum (4) Kunstlichtröhren (22) umfasst, welche je LED Reihen auf mindestens zwei unterschiedlich ausgerichteten Trägerflächen (23a) eines sich entlang einer Profilachse erstreckenden Profils, vorzugsweise eines Metallprofils, insbesondere eines Aluminiumprofils, aufweisen und bei denen die Profile mit den LEDs (24) in transparenten Röhren angeordnet sind, wobei im Querschnitt senkrecht zur Profillängsachse zwischen zwei in Umfangsrichtung um die Profillängsachse aneinander anschliessenden Trägerflächen (23a) ein Winkel im Bereich von 30° bis 160° ausgebildet ist.

11. Gewächshaus (1) nach Anspruch 10, **dadurch gekennzeichnet, dass** ein Bereich auf der von den Trägerflächen (23a) abgewandten Seite des Profils als Durchströmungsbereich ausgebildet ist, welcher bei durchströmender Luft Wärme vom Profil abführbar macht, und dass vorzugswiese der Bereich zwischen den Trägerflächen und der Röhre gegen die Umgebung dicht abgeschlossen ist.

12. Gewächshaus (1) nach Anspruch 10 oder 11, **dadurch gekennzeichnet, dass** die Profilachsen der Kunstlichtröhren (22) in Richtung der Längsachse des Gewächshauses (1) und/oder parallel zu Wandbereichen und im Wesentlichen senkrecht zur Längsachse des Gewächshauses (1) ausgerichtet sind, wobei die in Richtung der Längsachse des Gewächshauses ausgerichteten Kunstlichtröhren (22) vorzugsweise so angeordnet und ausgebildet sind, dass zumindest ein Teil des von diesen abgestrahlten Lichts über lichtreflektierende Teilbereiche der Lichtumlenkvorrichtung (8) zumindest teilweise so reflektiert wird, dass es quer zur Längsachse von der Lichtumlenkvorrichtung (8) weg gegen den mindestens einen im Innenraum (4) vorgesehenen Platz für Pflanzen gerichtet ist und wobei die senkrecht zur Längsachse des Gewächshauses (1) ausgerichteten Kunstlichtröhren (22) insbesondere vertikal ausgerichtet und so angeordnet und ausgebildet sind, dass zumindest ein Teil des von diesen abgestrahlten Lichts direkt gegen den mindestens einen im Innenraum (4) vorgesehenen Platz für Pflanzen gerichtet ist.

13. Gewächshaus (1) nach einem der Ansprüche 10 bis 12, **dadurch gekennzeichnet, dass** das Gewächshaus eine Steuerung umfasst, welche die Kunstlichtröhren so steuerbar macht, dass diese das für die Pflanzen jeweils optimale Licht, insbesondere mit einer zweckmässigen Intensität und Spektralverteilung, zu gewünschten Zeiten bereitstellen.

## Claims

1. Greenhouse (1) comprising wall and ceiling regions (2, 3) which at least partially enclose an interior (4) that extends along a longitudinal axis, wherein a receiving region (5) for receiving sunlight is formed in the ceiling region (3) and extends in the direction of the longitudinal axis, space for plants is provided in the interior (4) at least on one side of the longitudinal axis, a guide region (7) for introducing the sunlight into the interior (4) adjoins the receiving region (5) towards the interior (4), wherein a reflective light-deflecting device (8) extends in the interior (4) substantially in the direction of the longitudinal axis, the light-deflecting device (8) comprises light-reflecting sub-regions (10, 11), and the surface normals to the surfaces of said sub-regions (10) are oriented in predefined directions such that light entering through the guide region (7) is at least partially reflected by sub-regions (10) such that it is directed away from the light-deflecting device (8), transversely with respect to the longitudinal axis, towards the at least one space for plants that is provided in the interior (4), **characterized in that** the light-deflecting device (8) comprises two deflecting surfaces (9) which face away from one another and which extend over most of the height of the greenhouse (1), said deflecting surfaces being located close to one another at the upper ends thereof facing towards the receiving region (5) and the guide region (7) and being at an increasing distance from one another towards the bottom, wherein the deflecting surfaces (9) comprise, alternating in intersections with vertical transverse planes extending perpendicular to the longitudinal axis, sub-regions (10, 11) having lines of intersection in a first and a second orientation, and sub-regions (10) having the first orientation reflect light coming from above towards the space for plants and sub-regions (11) having the second orientation reflect light coming from below towards the space for plants.

2. Greenhouse (1) according to claim 1, **characterized in that** an angle in the range from 15° to 45°, in particular from 29° to 44°, is formed between the lines of intersection of the first orientation and a vertical line, and **in that** optionally an angle in the range from -10° to -45°, in particular from -21° to -36°, is formed between the lines of intersection of the second orientation and a vertical line.

3. Greenhouse (1) according to claim 1 or 2, **characterized in that** an angle of inclination of 2° to 15°, preferably of substantially 3° to 6°, is provided between the vertical and a plane applied externally to the respective deflecting surface (9), and in particular opposite angles in the range from 20° to 40° and -20° to -40° are formed between said externally applied plane and the sub-regions (10, 11) having lines of intersection in a first and a second orientation.

4. Greenhouse (1) according to any one of claims 1 to 3, **characterized in that** the guide region (7) comprises, on both sides of the longitudinal axis, light-reflecting lateral guide surfaces (12) which are optionally oriented vertically, but preferably the distance between the opposite lateral guide surfaces (12) increases from top to bottom such that sunrays entering at a shallow angle are deflected downwards when reflected, the orientations of the lateral guide surfaces optionally being adjustable.

5. Greenhouse (1) according to claim 4, **characterized in that** inner guide surfaces (13) are arranged transversely to the longitudinal axis in the guide region (7), preferably upper ends of the successive inner guide surfaces (13) are located gradually higher starting from the side close to the sun, or in particular inner guide surfaces (13) are used only in a section of the guide region (7) that faces away from the side close to the sun, wherein the inner guide surfaces (13) are optionally oriented vertically, but in particular are closer at the upper end than at the lower end to the side of the guide region (7) close to the sun such that sunrays entering the guide region (7) at a shallow angle are deflected downwards when reflected, the orientation of the inner guide surfaces optionally being adjustable.

6. Greenhouse (1) according to claim 4 or 5, **characterized in that** the guide surfaces form shaft-like channels which lead from the receiving region towards the interior (4) and which are arranged in a grid-like manner in plan view.

7. Greenhouse (1) according to any one of claims 1 to 6, **characterized in that** the receiving region (5) comprises an inlet opening (16) to the guide region (7) and feed elements, wherein the feed elements direct light towards the inlet opening.

8. Greenhouse (1) according to claim 7, **characterized in that** the feed elements are designed as light-reflecting directing surfaces (17) which direct light that would not directly reach the inlet opening (16) towards the inlet opening (16), wherein the directing surfaces (17) are preferably arranged on two sides of the inlet opening (16) and each lead away from an opening edge that is parallel to the longitudinal axis.

9. Greenhouse (1) according to claim 8, **characterized in that** the orientations of the directing surfaces (17) are adjustable such that, at the respective time of day, the largest possible amount of radiation reaches the inlet opening (16) via the directing surfaces (17), and to this end the adjustment takes place preferably as a pivoting movement about an axis at the respective opening edge of the inlet opening (16).

10. Greenhouse (1) according to any one of claims 1 to 9, **characterized in that** it comprises in the interior (4) artificial light tubes (22) which each have rows of LEDs on at least two differently oriented carrier surfaces (23a) of a profile extending along a profile axis, preferably a metal profile, in particular an aluminium profile, and in which the profiles having the LEDs (24) are arranged in transparent tubes, wherein, in cross-section perpendicular to the profile longitudinal axis, an angle in the range from 30° to 160° is formed between two carrier surfaces (23a) which follow one another in the circumferential direction around the profile longitudinal axis.

11. Greenhouse (1) according to claim 10, **characterized in that** a region on the side of the profile facing away from the carrier surfaces (23a) is designed as a through-flow region which, as air flows through, makes it possible to dissipate heat from the profile, and **in that** preferably the region between the carrier surfaces and the tube is tightly sealed against the surrounding environment.

12. Greenhouse (1) according to claim 10 or 11, **characterized in that** the profile axes of the artificial light tubes (22) are oriented in the direction of the longitudinal axis of the greenhouse (1) and/or parallel to wall regions and substantially perpendicular to the longitudinal axis of the greenhouse (1), wherein the artificial light tubes (22) oriented in the direction of the longitudinal axis of the greenhouse are preferably arranged and designed such that at least a portion of the light emitted therefrom is at least partially reflected via light-reflecting sub-regions of the light-deflecting device (8) such that it is directed away from the light-deflecting device (8), transversely to the longitudinal axis, towards the at least one space for plants that is provided in the interior (4), and wherein the artificial light tubes (22) oriented perpendicular to the longitudinal axis of the greenhouse (1) are in particular oriented vertically and are arranged and designed such that at least a portion of the light emitted therefrom is directed directly towards the at least one space for plants that is provided in the interior (4).

13. Greenhouse (1) according to any one of claims 10 to 12, **characterized in that** the greenhouse comprises a controller which makes the artificial light tubes controllable such that the latter provide the light that is in each case optimal for the plants, in particular with an appropriate intensity and spectral distribution, at desired times.

## Revendications

1. Serre (1) avec des zones de paroi et de plafond (2, 3) qui entourent au moins partiellement un espace intérieur (4) s'étendant le long d'un axe longitudinal, dans laquelle une zone de réception (5) destinée à recevoir la lumière du soleil et s'étendant dans la direction de l'axe longitudinal est formée dans la zone de plafond (3), une place pour des plantes est disponible dans l'espace intérieur (4) au moins d'un côté de l'axe longitudinal, une zone de guidage (7) destinée à introduire la lumière du soleil dans l'espace intérieur (4) se raccorde à la zone de réception (5) vers l'espace intérieur (4), dans laquelle un dispositif de déviation de lumière (8) réfléchissant s'étend dans l'espace intérieur (4) sensiblement dans la direction de l'axe longitudinal, le dispositif de déviation de lumière (8) comprend des zones partielles (10, 11) réfléchissant la lumière et les normales à la surface des surfaces de ces zones partielles (10) sont orientées dans des directions prédéfinies de telle sorte que la lumière entrant par la zone de guidage (7) est au moins partiellement réfléchie par des zones partielles (10) de manière à être dirigée transversalement à l'axe longitudinal, à partir du dispositif de déviation de lumière (8), vers ladite au moins une place pour des plantes prévue dans l'espace intérieur (4), **caractérisée en ce que** le dispositif de déviation de lumière (8) comprend deux surfaces de déviation (9) opposées l'une à l'autre, qui s'étendent sur la majeure partie de la hauteur de la serre (1) et sont proches l'une de l'autre à leurs extrémités supérieures tournées vers la zone de réception (5) ainsi que la zone de guidage (7) et présentent une distance croissante l'une de l'autre vers le bas, dans laquelle les surfaces de déviation (9) comprennent, dans des coupes par des plans transversaux verticaux s'étendant perpendiculairement à l'axe longitudinal, alternativement des zones partielles (10, 11) avec des lignes de coupe dans une première et une deuxième orientation, et les zones partielles (10) ayant la première orientation et les zones partielles (11) ayant la deuxième orientation réfléchissent respectivement la lumière venant du haut et la lumière venant du bas vers la place pour des plantes.

2. Serre (1) selon la revendication 1, **caractérisée en ce qu'**un angle dans la plage de 15° à 45°, en particulier de 29° à 44°, est formé entre les lignes de coupe de la première orientation et une ligne verticale, et que, éventuellement, un angle dans la plage de -10° à -45°, en particulier de -21° à -36°, est formé entre les lignes de coupe de la deuxième orientation et une ligne verticale.

3. Serre (1) selon la revendication 1 ou 2, **caractérisée en ce qu'**entre la verticale et un plan appliqué extérieurement sur la surface de déviation respective (9), il existe un angle d'inclinaison de 2° à 15°, de préférence de sensiblement 3° à 6°, et en particulier entre ce plan appliqué extérieurement et les zones partielles (10, 11) avec des lignes de coupe dans une première et une deuxième orientation, il est formé respectivement des angles opposés dans la plage de 20° à 40° et de -20° à -40°.

4. Serre (1) selon l'une des revendications 1 à 3, **caractérisée en ce que** la zone de guidage (7) comprend des surfaces de guidage latérales (12) réfléchissant la lumière des deux côtés de l'axe longitudinal, qui sont éventuellement orientées verticalement, mais, de préférence, la distance entre les surfaces de guidage latérales (12) opposées augmente de haut en bas, de sorte que les rayons du soleil entrant à plat sont déviés vers le bas lors de la réflexion, les orientations des surfaces de guidage latérales étant éventuellement réglables.

5. Serre (1) selon la revendication 4, **caractérisée en ce que** des surfaces de guidage intérieures (13) sont disposées dans la zone de guidage (7) transversalement à l'axe longitudinal, de préférence les extrémités supérieures des surfaces de guidage intérieures (13) successives sont situées progressivement plus haut en partant du côté proche du soleil, ou en particulier des surfaces de guidage intérieures (13) sont seulement utilisées dans une partie de la zone de guidage (7) opposée au côté proche du soleil, dans laquelle les surfaces de guidage intérieures (13) sont éventuellement orientées verticalement, mais, en particulier à l'extrémité supérieure, sont plus proches du côté proche du soleil de la zone de guidage (7) qu'à leur extrémité inférieure, de sorte que les rayons du soleil entrant à plat dans la zone de guidage (7) sont déviés vers le bas lors de la réflexion, l'orientation des surfaces de guidage intérieures étant éventuellement réglable.

6. Serre (1) selon la revendication 4 ou 5, **caractérisée en ce que** les surfaces de guidage forment des canaux en forme de puits menant de la zone de réception vers l'espace intérieur (4), lesquels canaux sont disposés à la manière d'une trame en vue de dessus.

7. Serre (1) selon l'une des revendications 1 à 6, **caractérisée en ce que** la zone de réception (5) comprend une ouverture d'entrée (16) vers la zone de guidage (7) ainsi que des éléments d'amenée, les éléments d'amenée guidant la lumière vers l'ouverture d'entrée.

8. Serre (1) selon la revendication 7, **caractérisée en ce que** les éléments d'amenée sont réalisés sous la forme de surfaces directrices (17) réfléchissant la lumière, qui dirigent vers l'ouverture d'entrée (16) la lumière qui n'atteindrait pas directement l'ouverture d'entrée (16), dans laquelle les surfaces directrices (17) sont de préférence disposées sur deux côtés de l'ouverture d'entrée (16), chaque fois en s'éloignant d'un bord d'ouverture parallèle à l'axe longitudinal.

9. Serre (1) selon la revendication 8, **caractérisée en ce que** les orientations des surfaces directrices (17) sont réglables de telle sorte qu'à chaque heure de la journée, une partie aussi grande que possible du rayonnement atteint l'ouverture d'entrée (16) par l'intermédiaire des surfaces directrices (17) et, à cet effet, le réglage a lieu de préférence sous la forme d'un mouvement de pivotement autour d'un axe au niveau du bord d'ouverture respectif de l'ouverture d'entrée (16).

10. Serre (1) selon l'une des revendications 1 à 9, **caractérisée en ce qu'**elle comprend dans l'espace intérieur (4) des tubes de lumière artificielle (22), qui présentent chacun des rangées de LED sur au moins deux surfaces de support (23a) orientées différemment d'un profilé s'étendant le long d'un axe de profilé, de préférence d'un profilé métallique, en particulier d'un profilé en aluminium, et dans laquelle les profilés avec les LED (24) sont disposés dans des tubes transparents, un angle dans la plage de 30° à 160° étant formé en section transversale perpendiculairement à l'axe longitudinal de profilé entre deux surfaces de support (23a) adjacentes dans la direction périphérique autour de l'axe longitudinal de profilé.

11. Serre (1) selon la revendication 10, **caractérisée en ce qu'**une zone du côté du profilé opposé aux surfaces de support (23a) est réalisée sous la forme d'une zone d'écoulement qui permet d'évacuer la chaleur du profilé lorsque de l'air circule à travers celle-ci, et que, de préférence, la zone entre les surfaces de support et le tube est hermétiquement fermée par rapport à l'environnement.

12. Serre (1) selon la revendication 10 ou 11, **caractérisée en ce que** les axes de profilé des tubes de lumière artificielle (22) sont orientés dans la direction de l'axe longitudinal de la serre (1) et/ou parallèlement aux zones de paroi et sensiblement perpendiculairement à l'axe longitudinal de la serre (1), dans laquelle les tubes de lumière artificielle (22) orientés dans la direction de l'axe longitudinal de la serre sont de préférence disposés et conçus de telle sorte qu'au moins une partie de la lumière qu'ils émettent est au moins partiellement réfléchie par des zones partielles du dispositif de déviation de lumière (8) de manière à être dirigée transversalement à l'axe longitudinal, à partir du dispositif de déviation de lumière (8), vers ladite au moins une place pour des plantes prévue dans l'espace intérieur (4), et dans laquelle les tubes de lumière artificielle (22) orientés perpendiculairement à l'axe longitudinal de la serre (1) sont en particulier orientés verticalement et disposés et conçus de telle sorte qu'au moins une partie de la lumière qu'ils émettent est dirigée directement vers ladite au moins une place pour des plantes prévue dans l'espace intérieur (4).

13. Serre (1) selon l'une des revendications 10 à 12, **caractérisée en ce que** la serre comprend un système de commande qui permet de commander les tubes de lumière artificielle de telle sorte qu'ils fournissent la lumière optimale pour les plantes, en particulier avec une intensité et une distribution spectrale appropriées, aux heures souhaitées.
